# EUROPEAN PATENT SPECIFICATION

(11) **EP 3 377 320 B1**
(45) Date of publication and mention of the grant of the patent: **15.11.2023**
(21) Application number: 16816468.9
(22) Date of filing: 16.11.2016
(51) Int. Cl.: B32B 27/36, C08J 5/18, C08G 63/672, C08L 67/02, B29C 67/00

(54) **COMPOSITIONS FOR THE PRODUCTION OF OBJECTS USING ADDITIVE MANUFACTURING**
ZUSAMMENSETZUNGEN ZUR HERSTELLUNG VON OBJEKTEN MITTELS GENERATIVER FERTIGUNG
COMPOSITIONS PERMETTANT LA PRODUCTION D'OBJETS À L'AIDE D'UNE FABRICATION ADDITIVE

(30) Priority: 19.11.2015 US 201562257253 P; 08.11.2016 US 201615345949
(43) Date of publication of application: 26.09.2018
(73) Proprietor: Eastman Chemical Company, Kingsport, TN 37660 (US)
(72) Inventor: WRIGHT, Steven, Frederick, Johnson City, TN 37604 (US); FRANJIONE, John, Guy, Gray, TN 37615 (US); DETWILER, Andrew, Thomas, Kingsport, TN 37660 (US); HEISE, William, Herbert, Jonesborough, TN 37659 (US); SHANG, Ping, Peter, Kingsport, TN 37660 (US)
(74) Representative: Ricker, Mathias
(86) International application number: PCT/US2016/062190
(87) International publication number: WO 2017/087464

(56) References cited:
- EP-A1- 0 464 921
- WO-A1-2005/025839
- JP-A- 2012 052 058
- US-A- 4 349 469
- US-A- 4 604 446
- US-A1- 2005 124 779
- US-A1- 2012 053 568

## Description

### BACKGROUND

Additive manufacturing is a process used to produce three-dimensional (3D) objects. Additive manufacturing can be performed by forming an object in a layer-by-layer process. Additive manufacturing processes often utilize electronic data that represents an object, such as a computer-aided design (CAD) model of the object, to produce the object. The electronic data can be processed by a computing device component of an additive manufacturing system to form the object. For example, an electronic representation of the object can be mathematically sliced into multiple horizontal layers. The horizontal layers can have contours that will produce the shape of the object being produced by the additive manufacturing system. The computing device component can generate a build path to form the contours for each horizontal layer and provide control signals to one or more components of the additive manufacturing system that are used to form the respective layers. In some cases, each layer can be formed by heating a polymeric powder to cause the particles of the powder to become flowable and coalesce. Causing particles of the polymeric powder to become flowable and coalesce can be referred to as "sintering." The particles of the polymeric powder can be heated using an energy source, such as a laser or an Infrared (IR) lamp.

WO 2005/124779 A1 discloses a rectangular solid article made from multiple layers of polyether-ester elastomer by laser sintering. The polyether-ester elastomer has a melting point of 193°C, and is a thermoplastic copolymer having a hard, crystalline segment of polybutylene phthalate and a soft, amorphous segment based on a long chain polyalkylene ether glycol.

### SUMMARY

The present invention is directed to:
An article comprising:
a plurality of layers including a polymeric material, the polymeric material including a copolyester ether having units of a diacid component and units of a glycol component, wherein:
the units of the diacid component are derived from at least one aliphatic dicarboxylic acid including 1,4-cyclohexanedicarboxylic acid; and
the units of the glycol component are derived from 1 ,4-cyclohexanedimethanol and a polyalkylene ether glycol, wherein
the article comprising the plurality of layers is obtained by selectively heating portions of a bed of powder including the polymeric material in a layer-by-layer manner according to a predetermined design using an energy source.

### BRIEF DESCRIPTION OF THE DRAWINGS

The detailed description is described with reference to the accompanying figures. In the figures, the left-most digit(s) of a reference number identifies the figure in which the reference number first appears. The same reference numbers in different figures indicates similar or identical items.
FIG. 1 illustrates example components of an additive manufacturing system.
FIG. 2 is a flow diagram of an example process to produce objects from a powder including a polymeric material using an additive manufacturing system.
FIG. 3 shows sample objects produced using a high speed sintering process with a poly(cyclohexylenedimethylene cyclohexane di-carboxylate ether)-based polymeric material.
FIG. 4 shows sample objects produced using a high speed sintering process with a poly(cyclohexylenedimethylene cyclohexane di-carboxylate ether)-based polymeric material and a fumed silica flow agent.
FIG. 5 shows sample additional objects produced using a high speed sintering process with a poly(cyclohexylenedimethylene cyclohexane dicarboxylate ether)-based polymeric material and a fumed silica flow agent.
FIG. 6 shows a set of sample objects produced using a laser sintering process with a poly(cyclohexylenedimethylene cyclohexane di-carboxylate ether)-based polymeric material and a fumed silica flow agent.
FIG. 7 shows an additional sample object produced using a laser sintering process with a poly(cyclohexylenedimethylene cyclohexane dicarboxylate ether)-based polymeric material and a fumed silica flow agent.

### DETAILED DESCRIPTION

The present disclosure is directed to, among other things, techniques, systems, and materials for producing objects using an additive manufacturing system. An object can be produced by forming a plurality of layers of a polymeric material from a powder of the polymeric material. The object can be produced according to a predetermined design that can be based on three-dimensional (3D) model data. The objects formed using the techniques, systems, and materials disclosed herein can be intended for any suitable application including, without limitation, modeling, rapid prototyping, production, and the like. In some cases, the materials and processes described herein can be implemented to mass manufacture objects with high throughput at additive manufacturing facilities. Industries that can benefit from the techniques, systems, and materials described herein include, without limitation, cosmetics and personal care products (e.g., cosmetic and personal care container manufacturing), beverage container manufacturing, product enclosure manufacturing, durable goods, medical devices, food contact applications, and so on.

The polymeric material used to produce the article of the present invention includes a copolyester ether having units of a diacid component and units of a glycol component, wherein the units of the diacid component are derived from at least one aliphatic dicarboxylic acid including 1,4-cyclohexanedicarboxylic acid; and the units of the glycol component are derived from 1,4-cyclohexanedimethanol and a polyalkylene ether glycol, wherein the article comprising the plurality of layers is obtained by selectively heating portions of a bed of powder including the polymeric material in a layer-by-layer manner according to a predetermined design using an energy source.

The techniques and systems described herein can result in objects having flexibility, while maintaining strength properties. Additionally, the techniques and systems described herein can produce objects with minimal defects. For example, objects produced using the techniques and systems described herein can have a minimal number of voids. Also, objects produced using the techniques and systems described herein can minimize unsintered powder when forming the objects and the objects can have adequate adhesion between the layers of the objects. Additionally, objects produced using the techniques and systems described herein can minimize char that may be formed during the production of the objects. In some cases, the modulus of elasticity and the elongation at break, among other physical properties, of the polymeric material used to produce the objects according to techniques and systems described herein can contribute to the properties of the objects produced using the polymeric material.

"Additive" as used throughout the specification can have more than one meaning as is evident to one of skill in the art: (1) In one meaning, "additive" is used with the term "manufacturing" to describe 3D printing (i.e., additive manufacturing). (2) In another meaning, "additive" is used to describe a component of the powder which does not chemically modify the polymer. In some situations the "additive" is blended with the polymer to form a polymer blend. Then the polymer blend is ground into a powder. In other situations, the additive is mixed with the polymer after the polymer has been ground to form a mixture. Nonlimiting examples include flow agent, antioxidant, coloring agent, and plasticizer. (3) In another meaning, "additive" is used to describe an agent that is a monomer of the polymer which chemically modifies the polymer. Nonlimiting examples include a branching agent, and cross-linking agent.

The techniques and systems described herein can be implemented in a number of ways. Example implementations are provided below with reference to the following figures.

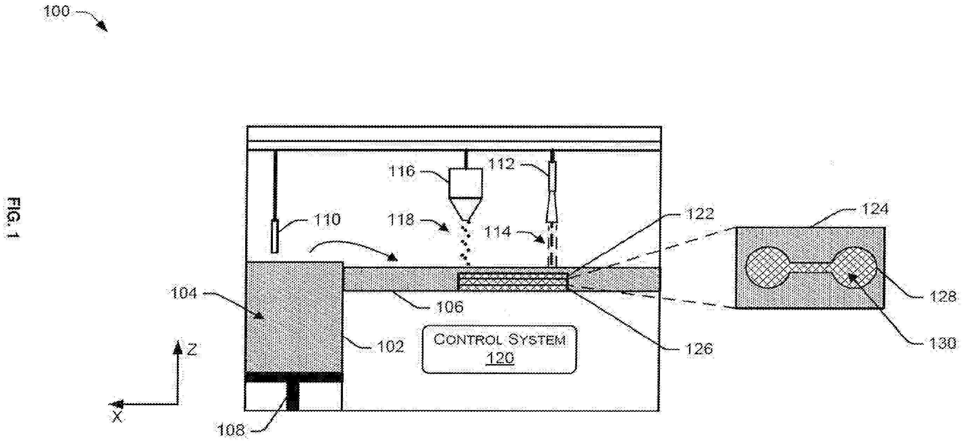

FIG. 1 illustrates components of an example additive manufacturing system 100. The system 100 can be configured to manufacture objects by utilizing additive manufacturing principles. For example, the system 100 can utilize laser sintering (LS) techniques or high speed sintering (HSS) techniques to produce objects. In particular, the system 100 can selectively heat portions of a bed of powder in a layer-by-layer manner using an energy source and according to a predetermined design to produce objects.

The system 100 can include a powder source 102. The powder source 102 can include a container that holds an amount of a powder 104. The powder 104 can be comprised of one or more materials. For example, the powder 104 can include one or more polymeric materials. Optionally, the powder 104 can also include one or more additives. To illustrate, the powder 104 can include an additive, such as a flow agent, an antioxidant, or both. In some cases when the powder 104 includes a plurality of materials, the plurality of materials can be mixed before being disposed in the powder source 102. In other situations when the powder 104 includes a plurality of materials, the plurality of materials can be mixed in the powder source 102.

At least a portion of the powder 104 can be produced by grinding pellets, or another form, of the one or more materials included in the powder 104. For example, a polymeric material in the powder 104 can be produced by grinding the polymeric material in an environment having a temperature of at least about -200°C, at least about -170 °C, at least about -150°C, at least about -120 °C, at least about -100°C, at least about -80 °C, or at least about - 50°C. Additionally, a polymeric material in the powder 104 can be produced by grinding the polymeric material at a temperature no greater than about 0°C, no greater than about -10°C, no greater than about -25°C, or no greater than about -40 °C. In an illustrative example, a polymeric material in the powder 104 can be produced by grinding the polymeric material in an environment having a temperature from about -200 °C to about 0 °C. In another illustrative example, a polymeric material in the powder 104 can be produced by grinding the polymeric material in an environment having a temperature from about - 175°C to about -25 °C. In an additional illustrative example, a polymeric material in the powder 104 can be produced by grinding the polymeric material in an environment having a temperature from about -100 °C to about -50°C.

Particles of a polymeric material included in the powder 104 can have a particular size distribution. For example, a polymeric material included in the powder 104 can have a d₁₀ of at least about 2 microns, at least about 4 microns, at least about 6 microns, at least about 8 microns, or at least about 10 microns. Additionally, particles of a polymeric material included in the powder 104 can have a d₁₀ of no greater than about 40 microns, no greater than about 35 microns, no greater than about 30 microns, no greater than about 25 microns, no greater than about 22 microns, no greater than about 20 microns, no greater than about 18 microns, no greater than about 15 microns, or no greater than about 12 microns. In an illustrative example, particles of a polymeric material included in the powder 104 can have a d₁₀ from about 1 micron to about 40 microns. In an illustrative example, particles of a polymeric material included in the powder 104 can have a d₁₀ from about 1 micron to about 35 microns. In an illustrative example, particles of a polymeric material included in the powder 104 can have a d₁₀ from about 1 micron to about 30 microns. In an illustrative example, particles of a polymeric material included in the powder 104 can have a d₁₀ from about 1 micron to about 25 microns. In another illustrative example, particles of a polymeric material included in the powder 104 can have a d₁₀ from about 5 microns to about 20 microns. In an additional illustrative example, particles of a polymeric material included in the powder 104 can have a d₁₀ from about 8 microns to about 16 microns.

In addition, particles of a polymeric material included in the powder 104 can have a d₅₀ of at least about 35 microns, at least about 38 microns, at least about 40 microns, at least about 42 microns, at least about 45 microns, at least about 48 microns, at least about 50 microns, at least about 60 microns, at least about 70 microns, or at least about 80 microns. Also, particles of a polymeric material included in the powder 104 can have a d₅₀ of no greater than about 90 microns, no greater than about 85 microns, no greater than about 80 microns, no greater than about 75 microns, no greater than about 70 microns, no greater than about 68 microns, no greater than about 65 microns, no greater than about 62 microns, no greater than about 60 microns, no greater than about 58 microns, no greater than about 55 microns, or no greater than about 52 microns. In an illustrative example, particles of a polymeric material included in the powder 104 can have a d₅₀ from about 35 microns to about 100 microns. In an illustrative example, particles of a polymeric material included in the powder 104 can have a d₅₀ from about 50 microns to about 90 microns. In an illustrative example, particles of a polymeric material included in the powder 104 can have a d₅₀ from about 70 microns to about 85 microns. In an illustrative example, particles of a polymeric material included in the powder 104 can have a d₅₀ from about 30 microns to about 80 microns. In another illustrative example, particles of a polymeric material included in the powder 104 can have a d₅₀ from about 35 microns to about 70 microns. In an additional illustrative example, particles of a polymeric material included in the powder 104 can have a d₅₀ from about 45 microns to about 65 microns.

Further, particles of a polymeric material included in the powder 104 can have a d₉₀ of at least about 90 microns, at least about 92 microns, at least about 95 microns, at least about 98 microns, at least about 100 microns, at least about 102 microns, at least about 105 microns, at least about 110 microns, at least about 120 microns, at least about 130 microns, at least about 140 microns, at least about 150 microns, at least about 160 microns, at least about 170 microns. Optionally, particles of a polymeric material included in the powder 104 can have a d₉₀ of no greater than about 170 microns, no greater than about 160 microns, no greater than about 150 microns, no greater than about 140 microns, no greater than about 135 microns, no greater than about 130 microns, no greater than about 125 microns, no greater than about 120 microns, no greater than about 115 microns, or no greater than about 110 microns. In an illustrative example, particles of a polymeric material included in the powder 104 can have a d₉₀ from about 85 microns to about 170 microns. In an illustrative example, particles of a polymeric material included in the powder 104 can have a d₉₀ from about 85 microns to about 150 microns. In another illustrative example, particles of a polymeric material included in the powder 104 can have a d₉₀ from about 90 microns to about 125 microns. In an additional illustrative example, particles of a polymeric material included in the powder 104 can have a d₉₀ from about 100 microns to about 115 microns.

An object can be formed from the powder 104 by forming a plurality of layers using the powder in a bed 106 according to a predetermined design. In particular, some of the powder from the powder source 102 can be disposed in the bed 106. For example, the system 100 can include a floor 108 that is movable in the Z-direction and a leveling device 110 to at least substantially level a top surface of the powder 104. Optionally, the leveling device 110 can include a mechanical scraper device. In other cases, the leveling device 110 can include one or more rollers. The floor 108 can move away from the bottom of the system 100 and push an amount of the powder 104 up the powder source 102. As the amount of the powder 104 spills over a side wall of the powder source 102 and into the bed 106, the leveling device 110 can move to spread the amount of the powder 104 substantially evenly across the bed 106.

The system 100 can also include an energy source 112 to cause portions of the powder 104 disposed in the bed 106 to sinter according a predetermined design. For example, the energy source 112 can provide energy 114, such as electromagnetic radiation, to particular portions of the powder 104 disposed in the bed 106 to cause the portions of the powder to sinter. In some cases, the energy source 112 can include a laser device. In a particular example, the energy source can include a Nd:Yittirum-Aluminum-Garnet (YAG) laser. In another particular example, the energy source can include a carbon dioxide (CO₂) laser. In other cases, the energy source 112 can transmit radiation in the infra-red (IR) range of the electromagnetic spectrum. For example, the energy source 112 can transmit radiation having wavelengths from about 700 nm to about 2000 nm. In another example, the energy source 112 can transmit radiation having wavelengths from about 800 nm to about 1400 nm. In a particular example, the energy source 112 can be an IR lamp.

The energy source 112 can move in the X-axis direction, the Z-axis direction, Y-axis direction or combinations to apply the energy 114 to the powder 104 disposed in the bed 106. In some cases, the energy 114 can be applied to the powder 104 disposed in the bed 106 using a single pass of the energy source 112 over a surface of the powder 104 disposed in the bed 106 that is exposed to the environment. In other cases, the energy 114 can be applied to the powder 104 disposed in the bed 106 using multiple passes of the energy source 112 over a surface of the powder 104 disposed in the bed

106 that is exposed to the environment. In a particular example, the energy 114 can be applied to the powder 104 disposed in the bed 106 using a first pass of the energy source 112 and a second pass of the energy source 112 over a surface of the powder 104 disposed in the bed 106 that is exposed to the environment.

An intensity of the energy source 112 can be at least about 3 W, at least about 5 W, at least about 7 W, at least about 10 W, at least about 12 W, or at least about 15 W. Additionally, an intensity of the energy source 112 can be no greater than about 35 W, no greater than about 32 W, no greater than about 29 W, no greater than about 25 W, no greater than about 21 W, or no greater than about 18 W. In an illustrative example, an intensity of the energy source 112 can be from about 2 W to about 35 W. In another illustrative example, an intensity of the energy source 112 can be from about 5 W to about 20 W. In an additional illustrative example, an intensity of the energy source 112 can be from about 9 Wto about 15 W In some cases, the energy source 112 can be set to provide approximately 100% of the intensity to the portion of the powder 104 disposed in the bed 106. In other cases, the energy source 112 can be set to provide less than approximately 100% of the intensity to the portion of the powder 104 disposed in the bed 106, such as no greater than about 95% of the intensity, no greater than about 90% of the intensity, no greater than about 80% of the intensity, or no greater than about 70 % of the intensity.

Additionally, the energy source 112 can apply the energy 114 with a power density of at least about 7000 W/cm², at least about 7500 W/cm², at least about 8000 W/cm², or at least about 8500 W/cm². Further, he energy source 112 can apply the energy 114 with a power density of no greater than about 11,000 W/cm², no greater than about 10,500 W/cm², no greater than about 10,000 W/cm², no greater than about 9500 W/cm², or no greater than about 9000 W/cm². In an illustrative example, the energy source 112 can apply the energy 114 with a power density from about 6000 W/cm² to about 12000 W/cm². In another illustrative example, the energy source 112 can apply the energy 114 with a power density from about 7500 W/cm² to about 10,500 W/cm². In a further illustrative example, the energy source 112 can apply the energy 114 with a power density from about 8500 W/cm² to about 10,000 W/cm².

Optionally, the system 100 can include a dispensing device 116 that can deposit a radiation absorbing material 118 onto the powder 104 disposed in the bed 106. The radiation absorbing material 118 can include particles of a substance that can enhance the absorption of energy by the portions of the powder 104 on which the radiation absorbing material 118 are disposed. In some cases, the radiation absorbing material 118 can enhance the absorption of electromagnetic radiation having wavelengths included in a specified range of wavelengths. In a particular example, the radiation absorbing material 118 can include carbon black.

The radiation absorbing material 118 can be suspended in a carrier liquid. For example, the radiation absorbing material 118 can include a polymeric material that is suspended in a solvent, such as an alcohol or water. In situations where the radiation absorbing material 118 is suspended in a liquid, the dispensing device 116 can include one or more nozzles or one or more orifices through which the carrier liquid and radiation absorbing material can be dispensed. In a particular example, the dispensing device 116 can be an ink jet dispensing device. In other scenarios, the radiation absorbing material 118 can be a powder that is deposited onto the bed 106 via the dispensing device 116.

Objects can be produced by the system 100 in a controlled environment, such as by confining individual ones of the components of the system 100 to a chamber or other enclosure formed by a housing of the system 100. In this way, conditions, such as temperature, and optionally other parameters (e.g., pressure) can be controlled and maintained at a desired level by elements configured to control temperature, pressure, etc. (e.g., heating elements, pumps, etc.).

Optionally, the powder 104 included in the powder source 102 can be heated, the powder 104 included in the bed 106 can be heated, or both. For example, at least one of the powder source 102 or the bed 106 can include a jacket or another type of casing having one or more heating elements. The heating elements can be used to heat the powder 104 in the powder source 102 and/or the powder 104 in the bed 106 at a particular temperature. In some cases, the temperature at which the heating elements are set can depend on a melting point of the powder 104.

Heating elements can be positioned above the powder source 102 to heat at least a portion of the powder 104 disposed in the powder source 102. For example, the heating elements can be included in a heating device that can move in the X-axis direction or in the Y-axis direction. Also, the heating elements can be included in a heating device that can move in the Z-direction proximate to a surface of the powder 104 disposed in the powder source 102. Furthermore, additional heating elements can be positioned above the bed 106 to heat at least a portion of the powder 104 disposed in the bed 106.

The heating elements of the powder source 102 can be set at a temperature of at least about 110°C, at least about 120°C, at least about 130°C, at least about 140°C, or at least about 150°C. In addition, the heating elements of the powder source 102 can be set at a temperature no greater than about 200°C, no greater than about 190°C, no greater than about 180°C, no greater than about 170°C, or no greater than about 160°C. In an illustrative example, the heating elements of the powder source 102 can be set at a temperature from about 100°C to about 210°C. In another illustrative example, the heating elements of the powder source 102 can be set at a temperature from about 110°C to about 180°C. In an additional illustrative example, the heating elements of the powder source 102 can be set at a temperature from about 115°C to about 140°C.

The heating elements positioned above the powder source 102 can be set at a temperature of at least about 110°C, at least about 120°C, at least about 130°C, at least about 140°C, at least about 150°C, or at least about 160°C. In addition, the heating elements positioned above the powder source 102 can be set at a temperature no greater than about 210°C, no greater than about 200°C, no greater than about 190°C, no greater than about 180°C, or no greater than about 170°C. In an illustrative example, the heating elements of the powder source 102 can be set at a temperature from about 100°C to about 215°C. In another illustrative example, the heating elements of the powder source 102 can be set at a temperature from about 110°C to about 190°C. In an additional illustrative example, the heating elements of the powder source 102 can be set at a temperature from about 120°C to about 170°C.

Optionally, the heating elements of the bed 106 can be set at a temperature of at least about 130°C, at least about 140°C, at least about 150°C, or at least about 160°C. In addition, the heating elements of the bed 106 can be set at a temperature no greater than about 210°C, no greater than about 200°C, no greater than about 190°C, no greater than about 180°C, or no greater than about 170°C. In an illustrative example, the heating elements of the bed 106 can be set at a temperature from about 120°C to about 220°C. In another illustrative example, the heating elements of the bed 106 can be set at a temperature from about 140°C to about 190°C. In an additional illustrative example, the heating elements of the bed 106 can be set at a temperature from about 160°C to about 180°C.

Also, the heating elements positioned above the bed 106 can be set at a temperature of at least about 130°C, at least about 140°C, at least about 150°C, or at least about 160°C. In addition, the heating elements positioned above the bed 106 can be set at a temperature no greater than about 210°C, no greater than about 200°C, no greater than about 190°C, no greater than about 180°C, or no greater than about 170 °C. In an illustrative example, the heating elements positioned above the bed 106 can be set at a temperature from about 120°C to about 220°C. In another illustrative example, the heating elements positioned above the bed 106 can be set at a temperature from about 140°C to about 190°C. In an additional illustrative example, the heating elements positioned above the bed 106 can be set at a temperature from about 160°C to about 180°C.

In situations where the radiation absorbing material 118 is not applied to a portion of the powder 104 disposed in the bed 106, the energy source 112 can move in the Z-axis direction, X-axis direction, Y-axis direction or combinations while applying the energy 114 to at least a portion of the powder 104 disposed in the bed 106 at a rate of at least about 1500 mm/s, at least about 2000 mm/s, at least about 2500 mm/s, at least about 3000 mm/s, at least about 3500 mm/s, at least about 4000 mm/s, at least about 6000 mm/s, at least about 8000 mm/s, at least about 10,000 mm/s, at least about 12,000 mm/s, at least about 14,000 mm/s or at least about 16,000 mm/s. Additionally, in situations where the radiation absorbing material 118 is not applied to a portion of the powder 104 disposed in the bed 106, the energy source 112 can move in the Z-axis direction, Y-axis direction, Y-axis direction or combinations while applying the energy 114 to the portion of the powder 104 disposed in the bed 106 at a rate no greater than about 16,000 mm/s, no greater than about 14,000 mm/s, no greater than about 12,000 mm/s, no greater than about 10,000 mm/s, no greater than about 8,000 mm/s, no greater than about 6500 mm/s, no greater than about 6000 mm/s, no greater than about 5500 mm/s, no greater than about 5000 mm/s, or no greater than about 4500 mm/s. In an illustrative example, in situations where the radiation absorbing material 118 is not applied to a portion of the powder 104 disposed in the bed 106, the energy source 112 can move in the Z-axis direction, X-axis direction, Y-axis direction or combinations while applying the energy 114 to the portion of the powder 104 disposed in the bed 106 at a rate from about 1000 mm/s to about 7000 mm/s. In another illustrative example, in situations where the radiation absorbing material 118 is not applied to a portion of the powder 104 disposed in the bed 106, the energy source 112 can move in the Z-axis direction, X-axis direction, Y-axis direction or combinations while applying the energy 114 to the portion of the powder 104 disposed in the bed 106 at a rate from about 3000 mm/s to about 6000 mm/s. In an additional illustrative example, in situations where the radiation absorbing material 118 is not applied to a portion of the powder 104 disposed in the bed 106, the energy source 112 can move in the Z-axis direction, X-axis direction, Y-axis direction or combinations while applying the energy 114 to the portion of the powder 104 disposed in the bed 106 at a rate from about 4500 mm/s to about 5500 mm/s.

Furthermore, in situations where the radiation absorbing material 118 is applied to a portion of the powder 104 disposed in the bed 106, the energy source 112 can move in the Z-axis direction , x-axis direction , y-axis direction or combinations while applying the energy 114 to at least a portion of the powder 104 disposed in the bed 106 at a rate of at least about 100 mm/s, at least about 110 mm/s, at least about 120 mm/s, or at least about 130 mm/s. Additionally, in situations where the radiation absorbing material 118 is applied to a portion of the powder 104 disposed in the bed 106, the energy source 112 can move in the Z-axis direction, x-axis direction , y-axis direction or combinations while applying the energy 114 to the portion of the powder 104 disposed in the bed 106 at a rate no greater than about 180 mm/s, no greater than about 170 mm/s, no greater than about 160 mm/s, no greater than about 150 mm/s, or no greater than about 140 mm/s. In an illustrative example, in situations where the radiation absorbing material 118 is applied to a portion of the powder 104 disposed in the bed 106, the energy source 112 can move in the Z-axis direction, x-axis direction, y-axis direction or combinations while applying the energy 114 to the portion of the powder 104 disposed in the bed 106 at a rate from about 100 mm/s to about 200 mm/s. In another illustrative example, in situations where the radiation absorbing material 118 is applied to a portion of the powder 104 disposed in the bed 106, the energy source 112 can move in the Z-axis direction, x-axis direction, y-axis direction or combinations while applying the energy 114 to the portion of the powder 104 disposed in the bed 106 at a rate from about 120 mm/s to about 180 mm/s. In an additional illustrative example, in situations where the radiation absorbing material 118 is applied to a portion of the powder 104 disposed in the bed 106, the energy source 112 can move in the Z-axis direction, x-axis direction, y-axis direction or combinations while applying the energy 114 to the portion of the powder 104 disposed in the bed 106 at a rate from about 140 mm/s to about 160 mm/s.

In some cases, the energy source 112 or another source of energy can be used to perform pre-heating of the powder 104 disposed in the bed 102 before the energy 114 is applied to sinter particles of the powder 104. During a preheating operation, the energy source 112 can move in the Z-axis direction, x-axis direction, y-axis direction or combinations while heating the powder 104 disposed in the bed 106 at a rate of at least about at least about 100 mm/s, at least about 110 mm/s, at least about 120 mm/s, or at least about 130 mm/s. Further, during a preheating operation, the energy source 112 can move in the Z-axis direction, x-axis direction, y-axis direction or combinations while heating the powder 104 disposed in the bed 106 at a rate no greater than about 180 mm/s, no greater than about 170 mm/s, no greater than about 160 mm/s, no greater than about 150 mm/s, or no greater than about 140 mm/s. In an illustrative example, during a preheating operation, the energy source 112 can move in the Z-axis direction, x-axis direction, y-axis direction or combinations while heating the powder 104 disposed in the bed 106 at a rate from about 100 mm/s to about 200 mm/s. In another illustrative example, during a preheating operation, the energy source 112 can move in the Z-axis direction, x-axis direction, y-axis direction or combinations while heating the powder 104 disposed in bed 106 at a rate from about 120 mm/s to about 180 mm/s. In an additional illustrative example, during a preheating operation, the energy source 112 can move in the Z-axis direction, x-axis direction, y-axis direction or combinations while heating the powder 104 disposed in the bed 102 at a rate from about 140 mm/s to about 160 mm/s.

Pre-heating of the powder 104 disposed in the bed 102 before the energy 114 is applied to sinter particles of the powder 104 can be performed by applying heat to the powder 104 disposed in the bed 102 at a temperature of at least about 100°C, at least about 110°C, at least about 120°C, at least about 130°C, at least about 140°C, or at least about 150°C. In addition, preheating of the powder 104 disposed in the bed 102 before the energy 114 is applied to sinter particles of the powder 104 can be performed by applying heat to the powder 104 disposed in the bed 102 at a temperature of no greater than about 200°C, no greater than about 190 °C, no greater than about 180°C, no greater than about 170°C, or no greater than about 160°C. In an illustrative example, the powder 104 disposed in the bed 106 can be preheated at a temperature from about 100 °C to about 200°C. In another illustrative example, the powder 104 disposed in the bed 106 can be preheated at a temperature from about 120°C to about 180°C. In an additional illustrative example, the powder 104 can be preheated at a temperature from about 130°C to about 170°C.

In situations where the energy source 112 is a laser, the energy source 112 can have a scan spacing of at least about 0.05 mm, at least about 0.07 mm, at least about 0.1 mm, at least about 0.15 mm, or at least about 0.2 mm. Additionally, when the energy source 112 is a laser, the energy source 112 can have a scan spacing of no greater than about 0.35 mm, no greater than about 0.33 mm, no greater than about 0.3 mm, no greater than about 0.28 mm, no greater than about 0.25 mm, or no greater than about 0.22 mm. In an illustrative example, when the energy source 112 is a laser, the energy source 112 can have a scan spacing from about 0.01 mm to about 0.5 mm. In another illustrative example, when the energy source 112 is a laser, the energy source 112 can have a scan spacing from about 0.05 mm to about 0.30 mm. In an additional illustrative example, when the energy source 112 is a laser, the energy source 112 can have a scan spacing from about 0.15 mm to about 0.25 mm.

The leveling device 110, the energy source 112, the dispensing device 116, or a combination thereof, can be coupled to one or more rails disposed substantially parallel to the X-axis direction, Y-axis direction or both, to one or more rails disposed substantially parallel to the Z-axis, or both. In this way, the leveling device 110, the energy source 112, the dispensing device 116, or a combination thereof, can move along the X-axis direction, Y-axis direction or both by moving along the one or more rails disposed substantially parallel to the X-axis. Additionally, the leveling device 110, the energy source 112, the dispensing device 116, or a combination, thereof can move along the Z-axis by moving along the one or more rails disposed substantially parallel to the X-axis direction, Y-axis direction or both. The leveling device 110, the energy source 112, the dispensing device 116, or a combination thereof, can moving along the one or more rails disposed substantially parallel to the X-axis direction, Y-axis direction or both, the one or more rails disposed substantially parallel to the Z-axis, or both by the use of one or more stepper motors, one or more servo motors, one or more microcontrollers, one or more belts, combinations thereof, and the like.

The system 100 can include a control system 120. The control system 120 can include one or more hardware processor devices and one or more physical memory devices. The one or more physical memory devices can be examples of computer storage media for storing instructions which are executed by the one or more processors to perform various functions. The one or more physical memory devices can include both volatile memory and non-volatile memory (e.g., RAM, ROM, or the like). The one or more physical memory devices can also include one or more cache memory devices, one or more buffers, one or more flash memory devices, or a combination thereof. The system 100 can also include one or more additional components, such as one or more input/output devices. For example, the system 100 can include a keyboard, a mouse, a touch screen, a display, speakers, a microphone, a camera, combinations thereof, and the like. The system 100 can also include one or more communication interfaces for exchanging data with other devices, such as via a network, direct connection, or the like. For example, the communication interfaces can facilitate communications within a wide variety of networks or connections, such as one or more wired networks or wired connections and/or one or more wireless networks or wireless connections.

The control system 120 can include, be coupled to, or obtain data from a computer-aided design (CAD) system to provide a digital representation of an object to be formed by the system 100. Any suitable CAD software program can be utilized to create the digital representation of the object. For example, a user can design, using a 3D modeling software program executing on a host computer, an object having a particular shape with specified dimensions that is to be manufactured using the system 100. In order to translate the geometry of the object into computer-readable instructions or commands usable by a processor or a suitable controller in producing the object, the control system 120 can mathematically slice the digital representation of the object into multiple horizontal layers. The control system 120 can then design build paths along which the energy source 112, the dispensing device 116, or both can move to produce the object.

The control system 120 can manage and/or direct one or more components of the system 100, such as the floor 108, the leveling device 110, the energy source 112, the dispenser 116, or a combination thereof, by controlling movement of those components according to a numerically controlled computer-aided manufacturing (CAM) program along computercontrolled paths. The movement of the various components of the system 100 can be performed by the use of stepper motors, servo motors, microcontrollers, combinations thereof, and the like.

Optionally, an object can be produced using the system 100 by disposing an amount of the powder 104 into the bed 106. Additionally, layers of an object can be formed by applying energy to a portion of the powder 104 according to a predetermined design. For example, a first layer 122, a second layer 124, and a third layer 126 can be formed by applying the energy 114 to the powder 104 via the energy source 112. In situations where the energy source 112 is a laser, the energy source 112 can move across the powder 104 disposed in the bed 106 according to a design, such as a design defined by contours 128. Objects produced using the system 100 can have approximately 100% infill (i.e., a solid object), or with less than 100% infill (at least a partially hollow interior portion of the object).

In an illustrative example, the energy source 112 can include a laser and the control system 120 can cause the energy source 112 to apply the energy 114 to portions of the powder 104 disposed in the bed 106 while moving in accordance with the contours 128 of a predetermined design. The contours 128 can provide boundaries for the object being produced. In this way, the movement of the energy source 112 and application of the energy 114 to the powder 104 based on the contours 128 can produce a layer of an object having the shape 130.

In another illustrative example, the energy source 112 can be an IR lamp and the dispensing device 116 can deposit a radiation absorbing material 118 onto portions of the powder 104 disposed in the bed 106 according to the contours 128. Thus, the control system 120 can cause the dispensing device 116 to dispense the radiation absorbing material 118 onto portions of the powder 104 disposed in the bed 106 as the dispensing device 116 moves across the powder 104 based on a predetermined design according to the contours 128. After the radiation absorbing material 118 is disposed onto the powder 104 disposed in the bed 106 according to a predetermined design, the control system 120 can then cause the energy source 112 to move across portions of the powder 104 disposed in the bed 106. In this way, the portions of the powder on which the radiation absorbing material 118 has been disposed can absorb an amount of radiation that is greater than the portions of the powder 104 that did not have the radiation absorbing material disposed on them. Accordingly, the portions of the powder 104 on which the radiation absorbing material 118 is disposed can be sintered to form a layer of an object.

After a single layer of an object is formed, such as the first layer 122, an additional amount of the powder 104 disposed in the powder source 102 can be deposited into the bed 106. To illustrate, the control system 120 can cause the floor 108 of the powder source 102 to move upward in the X-axis direction, Y-axis direction or both and cause an amount of the powder 104 to spill over into the bed 106. Subsequently, the control system 120 can cause the leveling device 110 to move to distribute the newly deposited powder 104 across the bed 106. The control system 120 can then operate to cause the energy source 112 to move according to the contours 128 and transmit energy 114 onto portions of the powder 104 disposed in the bed 106 to produce the second layer 124 having the predetermined design of the object being formed. Alternatively, the control system 120 can operate to cause the dispensing device 114 to deposit an additional amount of the radiation absorbing material 118 onto portions of the powder 104 disposed in the bed 106 and then cause the energy source 112 to transmit the energy 114 onto the powder 104 disposed in the bed 106 and form the second layer 124.

The control system 120 can then proceed to operate the floor 108, the leveling device 110, the energy source 112, and, in some instances the dispensing device 116 to form a plurality of layers of the powder 104 to produce an object. In some cases, an interface can be formed between the layers of the object. For example, an interface can be formed between the first layer 122 and the second layer 124 and an additional interface can be formed between the second layer 124 and the third layer 126. In an illustrative example, an interface formed between the first layer 122 and the second layer 124 can be caused by the portions of the first layer 122 adjacent to portions of the second layer 124 to be fused together as the energy 114 is applied to the powder 104 by the energy source 112. In some cases, the interface can include an amount of the radiation absorbing material, residues of a carrier liquid for the radiation absorbing material, or both. The layers 122, 124, 126 can also include an amount of a dye or pigment that was included in the powder 104 to provide color to an object formed using the powder 104. In addition, the layers 122, 124, 126 can include one or more adhesives that were included in the powder 104. Optionally, the one or more adhesives can include a cureable epoxy-based adhesive. Further, the one or more adhesives can include a polyurethane-based adhesive. The one or more adhesives can also include an acrylic-based adhesive.

The individual layers of objects produced using the system 100, such as the layers 122, 124, 126, can have a thickness in the Z-direction of at least about 0.04 mm, at least about 0.07 mm, at least about 0.10 mm, at least about 0.12 mm, at least about 0.15 mm, at least about 0.18 mm, or at least about 0.20 mm. Additionally, the individual layers of objects produced using the system 100 can have a thickness in the Z-direction of no greater than about 0.50 mm, no greater than about 0.45 mm, no greater than about 0.40 mm, no greater than about 0.35 mm, no greater than about 0.30 mm, or no greater than about 0.25 mm. In an illustrative example, the individual layers of objects produced using the system 100 can have a thickness from about 0.02 mm to about 0.75 mm. In another illustrative example, the individual layers of objects produced using the system 100 can have a thickness from about 0.05 mm to about 0.40 mm. In an additional illustrative example, the individual layers of objects produced using the system 100 can have a thickness from about 0.10 mm to about 0.30 mm.

The powder 104 includes one or more polymeric materials. The one or more polymeric materials of the powder 104 include a copolyester ether. The copolyester ether has units of a diacid component and units of a glycol component.

Additionally, the one or more polymeric materials of the powder 104 can include a composition comprising a thermoplastic elastomer. For example, the one or more polymeric materials of the powder 104 can include a composition comprising a styrene block copolymer. Further, the one or more polymeric materials of the powder 104 can include a composition comprising a resin component. In an illustrative example, the resin can include a hydrocarbon-based resin. In some cases, the one or more polymeric materials of the powder 104 can include a composition comprising a copolyester ether, a styrene block copolymer, and a resin component.

According to the invention, units of the diacid component are derived from at least one aliphatic dicarboxylic acid including 1,4-cyclohexanedicarboxylic acid. An aliphatic dicarboxylic acid can include 1 to 20 carbon atoms, 1 to 12 carbon atoms, or 2 to 8 carbon atoms and be saturated or unsaturated, straight chain, branched, or cyclic dicarboxylic acids. In some cases, an aliphatic dicarboxylic acid can be comprised of repeating units of one or more polymeric groups. In other cases, an aliphatic dicarboxylic acid can be comprised of a hydrocarbon-based chain that does not include repeating units.

In an example, the acid component can include units derived from at least one aliphatic dicarboxylic acid having from 8 to 12 carbon atoms. To illustrate, the acid component can include units derived from 1,4-cyclohexanedicarboxylic acid. Units of the acid component can also be derived from additional aliphatic dicarboxylic acids. To illustrate, units of the acid component can be derived from oxalic acid, malonic acid, succinic acid, glutaric acid, adipic acid, pimelic acid, suberic acid, azelaic acid, sebacic acid, maleic acid, or combinations thereof. An aromatic dicarboxylic acid used to derive units of the acid component can include terephthalic acid. Another aromatic dicarboxylic acid used to derive units of the acid component can include isophthalic acid.

Alternatively, the acid component can include units derived from an ester of one or more acids. Optionally, the acid component can be derived from a C₁-C₄ ester of one or more acids. In certain examples, the acid component can include units derived from a C₁-C₄ ester of 1,4-cyclohexane dicarboxylic acid. In an illustrative example, the acid component can include units derived from dimethyl cyclohexane 1,4-dicarboxylate. In another illustrative example, the acid component can include units derived from diethyl cyclohexane 1,4-dicarboxylate. Optionally, substantially all of the units of the acid component can be derived from 1,4-cyclohexane dicarboxylic acid. In other cases, all or substantially all of the units of the acid component can be derived from dimethyl cyclohexane 1,4-dicarboxylate. Esters of aromatic dicarboxylic acids can be used to derive units of the acid component. To illustrate, esters of terephthalic acid can be used to derive units of the acid component. Also, esters of isophthalic acid can be used to derive units of the acid component.

The acid component can include units derived from a single acid. In other cases, the acid component can include units derived from multiple diacids. For example, the acid component can include units derived from a first acid and a second acid. In a particular example, the first acid can include 1,4-cyclohexanedicarboxylic acid and the second acid can include another dicarboxylic acid having 3 to 36 carbon atoms. To illustrate, the second acid can include an aliphatic dicarboxylic acid, such as sebacic acid, glutaric acid, or azelaic acid.

In some cases, at least about 5% of units of the acid component can be derived from aliphatic dicarboxylic acids or esters thereof, at least about 10% of units of the acid component can be derived from aliphatic dicarboxylic acids or esters thereof, at least about 25% of units of the acid component can be derived from aliphatic dicarboxylic acids or esters thereof, at least about 40% of units of the acid component can be derived from aliphatic dicarboxylic acids or esters thereof, at least about 50% of units of the acid component can be derived from aliphatic dicarboxylic acids or esters thereof, at least about 75% of units of the acid component can be derived from aliphatic dicarboxylic acids or esters thereof, or at least about 99% of units of the acid component can be derived from aliphatic dicarboxylic acids or esters thereof. Furthermore, all or substantially all of the units of the acid component can be derived from aliphatic dicarboxylic acids or esters thereof. In an illustrative example, from about 1% to about 99% of the units of the acid component can be derived from aliphatic dicarboxylic acids or esters thereof, from about 5% to about 25% of the units of the acid component can be derived from aliphatic dicarboxylic acids or esters thereof, from about 25% to about 50% of the units of the acid component can be derived from aliphatic dicarboxylic acids or esters thereof, from about 50% to about 75% of the units of the acid component can be derived from aliphatic dicarboxylic acids or esters thereof, or from about 75% to about 99% of the units of the acid component can be derived from aliphatic dicarboxylic acids or esters thereof.

When units of the acid component are derived from multiple acids, units of the acid component can include from at least about 75 mole % of units derived from a first acid, at least about 80 mole % of units derived from the first acid, or at least about 85 mole % of units derived from the first acid. In addition, when units of the acid component are derived from multiple acids, the acid component can include at least about 98 mole % of units derived from the first acid, at least about 95 mole % of units derived from the first acid, or at least about 90 mole % of units derived from the first acid. In an illustrative example, the acid component can include from about 70 mole % to about 99 mole % of units derived from the first acid. In another illustrative example, the acid component can include from about 80 mole % to about 95 mole % of units derived from the first acid.

Also, when units of the acid component are derived from multiple acids, units of the acid component can be derived from at least about 2 mole % of a second acid, at least about 5 mole % of a second acid, or at least about 10 mole % of a second acid. Further, when units of the acid component are derived from multiple acids, units of the acid component can be derived from no greater than about 30 mole % of a second acid, no greater than about 25 mole % of a second acid, no greater than about 20 mole % of a second acid, or no greater than about 15 mole % of a second acid. In an illustrative example, units of the acid component can be derived from about 1 mole % to about 30 mole % of a second acid. In another illustrative example, units of the acid component can be derived from about 5 mole % to about 20 mole % of a second acid.

In some cases, the acid component can be derived from a single isomer of an acid, such as a trans isomer of an acid. In other cases, the acid component can be derived from a mixture of isomers of an acid. For example, the acid component can be derived from at least about 65 mole % of a trans isomer of an acid, at least about 70 mole % of a trans isomer of an acid, at least about 75 mole % of a trans isomer of an acid, or at least about 80 mole % of the trans isomer of an acid. Additionally, the acid component can be derived from no greater than about 99 mole % of a trans isomer of an acid, no greater than about 95 mole % of the trans isomer of an acid, no greater than about 90 mole % of the trans isomer of an acid, or no greater than about 85 mole % of the trans isomer of an acid. In an illustrative example, the acid component can be derived from about 60 mole % to about 100 mole % of the trans isomer of the acid. In another illustrative example, the acid component can be derived from about 75 mole % to about 98 mole% of the trans isomer of an acid. In an additional illustrative example, the acid component can be derived from about 85 mole % to about 95 mole % of the trans isomer of an acid.

Further, the acid component can be derived from at least about 1 mole % of the cis isomer of an acid, at least about 5 mole % of the cis isomer of an acid, at least about 10 mole % of the cis isomer of an acid, or at least about 15 mole % of the cis isomer of an acid. Additionally, the acid component can be derived from no greater than about 35 mole % of the cis isomer of an acid, no greater than about 30 mole % of the cis isomer of an acid, no greater than about 25 mole % of the cis isomer of an acid, or no greater than about 20 mole % of the cis isomer of an acid. In an illustrative example, the acid component can be derived from about 1 mole % to about 40 mole % of the cis isomer of an acid. In another illustrative example, the acid component can be derived from about 2 mole % to about 25 mole % of the cis isomer of an acid. In an additional illustrative example, the acid component can be derived from about 5 mole % to about 15 mole % of the cis isomer of an acid.

The units of the glycol component are derived from 1,4-cyclohexanedimethanol and a polyalkylene ether glycol. The glycol component can include units derived from multiple glycols. In a particular example, the glycol component can include units derived from a first glycol and a second glycol. In some cases, the units of the glycol component can be derived from a first glycol including a cyclohexanedimethanol and a second glycol including an aliphatic glycol having from 2 to 13 carbon atoms. An aliphatic glycol can include 1 to 20 carbon atoms, 1 to 12 carbon atoms, or 2 to 8 carbon atoms and be saturated or unsaturated, straight chain, branched, or cyclic glycols. In some cases, an aliphatic glycol can be comprised of repeating units of one or more polymeric groups. In other cases, an aliphatic glycol can be comprised of a hydrocarbon-based chain that does not include repeating units. In an illustrative example, the first glycol can include 1,4-cyclohexanedimethanol.

In addition, the second glycol can include a polyalkylene ether glycol. For example, the second glycol can have the structure H-[O(CH₂)ₙ]ₘ-OH , where n is an integer from 2 to 10, and m is an integer from 2 to 30. To illustrate, the second glycol can include polytetramethylene glycol, polyethylene ether glycol, or polypropylene ether glycol. To further illustrate, polyethylene ether glycol is: 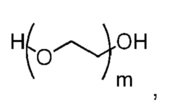 polypropylene ether glycol is: 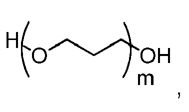 and polytetramethylene ether glycol is: 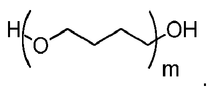 Optionally, the glycol component can be modified by a third glycol. In some cases, the third glycol can include ethylene glycol, diethylene glycol, or alkylene diols. Examples of alkylene diols include 1,4-butanediol, or 1,6-hexanediol.

Units of the glycol component can be derived from one or more aromatic diols. In addition, units of the glycol component can be derived from one or more aliphatic diols. Optionally, units of the glycol component can be derived from one or more aromatic diols and one or more aliphatic diols. Further, units of the glycol component can be derived from an aliphatic glycol having 1 to 20 carbons atoms, an aliphatic glycol having 1 to 12 carbon atoms, or an aliphatic glycol having 2 to 8 carbon atoms. Aliphatic glycols used to derive units of the glycol component can include saturated or unsaturated, straight chain, branched, or cyclic diols. Aliphatic diols can include repeating units of a polymer, in some cases. In other cases, aliphatic diols can be free of repeating units.

Optionally, at least about 5% of the units of the glycol component can be derived from one or more aliphatic diols, at least about 10% of the units of the glycol component can be derived from one or more aliphatic diols, at least about 25% of the units of the glycol component can be derived from one or more aliphatic diols, at least about 40% of the units of the glycol component can be derived from one or more aliphatic diols, at least about 50% of the units of the glycol component can be derived from one or more aliphatic diols, at least about 75% of the units of the glycol component can be derived from one or more aliphatic diols, or at least about 99% of the units of the glycol component can be derived from one or more aliphatic diols. Furthermore, all or substantially all of the units of the glycol component can be derived from one or more aliphatic diols. In an illustrative example, from about 1% to about 99% of the units of the glycol component can be derived from one or more aliphatic diols, from about 5% to about 25% of the units of the glycol component can be derived from one or more aliphatic diols, from about 25% to about 50% of the units of the glycol component can be derived from one or more aliphatic diols, from about 50% to about 75% of the units of the glycol component can be derived from one or more aliphatic diols, or from about 75% to about 99% of the units of the glycol component can be derived from one or more aliphatic diols. In an illustrative example, all or substantially all of the units of the glycol component can be derived from 1,4-cyclohexanedimethanol.

Units of the glycol component can be derived from at least about 70 mole % of the first glycol, at least about 75 mole % of the first glycol, at least about 80 mole % of the first glycol, or at least about 85 mole % of the first glycol. In addition, units of the glycol component can be derived from no greater than about 98 mole % of the first glycol, no greater than about 95 mole % of the first glycol, no greater than about 90 mole % of the first glycol, or no greater than about 88 mole % of the first glycol. In an illustrative example, units of the glycol component can be derived from about 65 mole % to about 99 mole % of the first glycol. In another illustrative example, units of the glycol component can be derived from about 70 mole % to about 95 mole % of the first glycol. In an additional illustrative example, units of the glycol component can be derived from about 85 mole % to about 95 mole % of the first glycol.

Additionally, units of the glycol component can be derived from at least about 2 mole % of the second glycol, at least about 5 mole % of the second glycol, at least about 10 mole % of the second glycol, or at least about 15 mole % of the second glycol. Further, units of the glycol component can be derived from no greater than about 35 mole % of the second glycol, no greater than about 30 mole % of the second glycol, no greater than about 25 mole % of the second glycol, or no greater than about 30 mole % of the second glycol. In an illustrative example, units of the glycol component can be derived from about 1 mole % to about 40 mole % of the second glycol. In another illustrative example, units of the glycol component can be derived from about 5 mole % to about 30 mole % of the second glycol. In an additional illustrative example, units of the glycol component can be derived from about 5 mole % to about 15 mole % of the second glycol.

Further, units of the glycol component can be derived from at least about 2 mole % of the third glycol, at least about 5 mole % of the third glycol, at least about 8 mole % of the third glycol, or at least about 10 mole % of the third glycol. The units of the glycol component can also be derived from no greater than about 25 mole % of the third glycol, no greater than about 20 mole % of the third glycol, no greater than about 15 mole % of the third glycol, or no greater than about 12 mole % of the third glycol. In an illustrative example, units of the glycol component can be derived from about 1 mole % to about 25 mole % of the third glycol. In another illustrative example, units of the glycol component can be derived from about 5 mole % to about 15 mole % of the third glycol. In an additional illustrative example, units of the glycol component can be derived from about 10 mole % to about 20 mole % of the third glycol.

The glycol component can include units derived from a mixture of isomers of the first glycol. For example, units of the glycol component can be derived from at least about 60 mole % of a trans isomer of the first glycol, at least about 65 mole % of a trans isomer of the first glycol, at least about 70 mole % of a trans isomer of the first glycol, or at least about 75 mole % of the trans isomer of the first glycol. Additionally, the glycol component can be derived from no greater than about 99 mole % of a trans isomer of the first glycol, no greater than about 95 mole % of the trans isomer of the first glycol, no greater than about 90 mole % of the trans isomer of the first glycol, no greater than about 85 mole % of the trans isomer of the first glycol, or no greater than about 80 mole % of the trans isomer of the first glycol. In an illustrative example, the glycol component can be derived from about 55 mole % to about 100 mole % of the trans isomer of the first glycol. In another illustrative example, the glycol component can be derived from about 75 mole % to about 95 mole% of the trans isomer of the first glycol. In an additional illustrative example, the glycol component can be derived from about 80 mole % to about 90 mole % of the trans isomer of the first glycol.

Further, the glycol component can be derived from at least about 1 mole % of the cis isomer of the first glycol, at least about 5 mole % of the cis isomer of the first glycol, at least about 10 mole % of the cis isomer of the first glycol, at least about 15 mole % of the cis isomer of the first glycol, or at least about 20 mole % of the cis isomer of the first glycol. Additionally, the glycol component can be derived from no greater than about 45 mole % of the cis isomer of the first glycol, no greater than about 40 mole % of the cis isomer of the first glycol, no greater than about 30 mole % of the cis isomer of the first glycol, no greater than about 25 mole % of the cis isomer of the first glycol, or no greater than about 20 mole % of the cis isomer of the first glycol. In an illustrative example, the glycol component can be derived from about 1 mole % to about 45 mole % of the cis isomer of the first glycol. In another illustrative example, the glycol component can be derived from about 5 mole % to about 35 mole % of the cis isomer of the first glycol. In an additional illustrative example, the glycol component can be derived from about 10 mole % to about 25 mole % of the cis isomer of the first glycol.

Optionally, a molecular weight of the second glycol can be at least about 400, at least about 600, at least about 1000, at least about 1250, at least about 1500, at least about 1750, or at least about 2000. Additionally, a molecular weight of the second glycol can be no greater than about 3500, no greater than about 3200, no greater than about 2800, no greater than about 2500, or no greater than about 2250. In an illustrative example, a molecular weight of the second glycol can be from about 300 to about 4000. In another illustrative example, a molecular weight of the second glycol can be from about 600 to about 3000. In an additional illustrative example, a molecular weight of the second glycol can be from about 1000 to about 2000. In a further illustrative example, a molecular weight of the second glycol can be from about 800 to about 1200. As used herein, the molecular weight of compounds can refer to the number average molecular weight.

An ether segment of the copolyester ether can include a polyalkylene glycol. For example, units of the ether segment can include polyethylene glycol, polypropylene glycol, polytetramethylene glycol, or mixtures thereof. Optionally, at least about 5% of the units of the ether segment can be derived from polyaklylene glycol, at least about 10% of the units of the ether segment can be derived from polyaklylene glycol, at least about 25% of the units of the ether segment can be derived from polyaklylene glycol, at least about 40% of the units of the ether segment can be derived from polyaklylene glycol, at least about 50% of the units of the ether segment can be derived from polyaklylene glycol, at least about 75% of the units of the ether segment can be derived from polyaklylene glycol, or at least about 99% of the units of the ether segment can be derived from polyaklylene glycol. In some cases, all or substantially all of the units of the ether segment can be derived from polyaklylene glycol. In an illustrative example, from about 1% to about 99% of the units of the ether segment can be derived from polyaklylene glycol, from about 5% to about 25% of the units of the ether segment can be derived from polyaklylene glycol, from about 25% to about 50% of the units of the ether segment can be derived from polyaklylene glycol, from about 50% to about 75% of the units of the ether segment can be derived from polyaklylene glycol, or from about 75% to about 99% of the units of the ether segment can be derived from polyaklylene glycol.

The ether segment of the copolyester ether can have a molecular weight of at least about 50 g/mol, at least about 100 g/mol, at least about 250 g/mol, at least about 500 g/mol, at least about 1000 g/mol, at least about 2000 g/mol, at least about 3000 g/mol, or at least about 4000 g/mol. Additionally, the ether segment of the copolyester ether can have a molecular weight no greater than about 12,000 g/mol, no greater than about 10,000 g/mol, no greater than about 9000 g/mol, no greater than about 8000 g/mol, no greater than about 7000 g/mol, no greater than about 6000 g/mol, or no greater than about 5000 g/mol. In an illustrative example, the ether segment of the copolyester ether can have a molecular weight from about 50 g/mol to about 10,000 g/mol. In another illustrative example, the ether segment of the copolyester ether can have a molecular weight from about 200 g/mol to about 7500 g/mol. In an additional illustrative example, the ether segment of the copolyester ether can have a molecular weight from about 400 g/mol to about 5000 g/mol.

The ester segment of the copolyester ether can comprise at least about 40% by weight of the copolyester ether, at least about 45% by weight of the copolyester ether, at least about 50% by weight of the copolyester ether, at least about 55% by weight of the copolyester ether, at least about 60% by weight of the copolyester ether, or at least about 65% by weight of the copolyester ether. Additionally, the ester segment of the copolyester ether can comprise no greater than about 95% by weight of the copolyester ether, no greater than about 90% by weight of the copolyester ether, no greater than about 85% by weight of the copolyester ether, no greater than about 80% by weight of the copolyester ether, no greater than about 75% by weight of the copolyester ether, or no greater than about 70% by weight of the copolyester ether. In an illustrative example, the ester segment of the copolyester ether can comprise from about 40% by weight to about 95% by weight of the copolyester ether. In another illustrative example, the ester segment can comprise from about 70% by weight to about 90% by weight of the copolyester ether. In an additional illustrative example, the ester segment can comprise from about 75% by weight to about 85% by weight of the copolyester ether.

The ether segment of the copolyester ether can comprise at least about 5% by weight of the copolyester ether, at least about 8% by weight of the copolyester ether, at least about 10% by weight of the copolyester ether, at least about 12% by weight of the copolyester ether, at least about 15% by weight of the copolyester ether, at least about 18% by weight of the copolyester ether, or at least about 20% by weight of the copolyester ether. Additionally, the ether segment of the copolyester ether can comprise no greater than about 35% by weight of the copolyester ether, no greater than about 32% by weight of the copolyester ether, no greater than about 30% by weight of the copolyester ether, no greater than about 28% by weight of the copolyester ether, no greater than about 25% by weight of the copolyester ether, or no greater than about 22% by weight of the copolyester ether. In an illustrative example, the ether segment of the copolyester ether can comprise from about 2% by weight to about 38% by weight of the copolyester ether. In another illustrative example, the ether segment can comprise from about 10% by weight to about 30% by weight of the copolyester ether. In an additional illustrative example, the ether segment can comprise from about 15% by weight to about 25% by weight of the copolyester ether.

The thermoplastic elastomer of the composition included in the one or more polymeric materials of the powder 104 can include a styrene block copolymer. Also, the thermoplastic elastomer can include an ethylene vinyl acetate copolymer. In some cases, the thermoplastic elastomer can include a styrene block copolymer and an ethylene vinyl acetate copolymer. The thermoplastic elastomer can also include a modified block copolymer including polycarboxyl functional groups. For example, the thermoplastic elastomer can include a cyclic anhydride.

Optionally, styrene block copolymers comprising the thermoplastic elastomer can have an A-B-A configuration. The "A" can include a styrene polymer block. The "B" can include one or more conjugated diene polymer blocks. The styrene block copolymer can include a styrene-isoprene-styrene block copolymer. In addition, the styrene block copolymer can include a styrene-butadiene-styrene block copolymer. Also, the styrene block copolymer can include a styrene-ethylene-propylene-styrene block copolymer. Further, the styrene block copolymer can include a styrene-ethylene-butylene-styrene block copolymer. The styrene block copolymer can also include a styrene-vinylisoprene-isoprene-styrene block copolymer. In some cases, the styrene block copolymer can include a mixture of one or more of a styrene-isoprene-styrene block copolymer, a styrene-butadiene-styrene block copolymer, a styrene-ethylene-propylene-styrene block copolymer, a styrene-ethylene-butylene-styrene block copolymer, or a styrene-vinylisoprene-isoprene-styrene block copolymer. In other cases, the styrene block copolymer can include hydrogenated derivatives of a styrene-isoprene-styrene block copolymer, a styrene-butadiene-styrene block copolymer, a styrene-ethylene-propylene-styrene block copolymer, a styrene-ethylene-butylene-styrene block copolymer, a styrene-vinylisoprene-isoprene-styrene block copolymer, or mixtures thereof.

A styrene block copolymer can comprise at least about 40% by weight of the thermoplastic elastomer, at least about 45% by weight of the thermoplastic elastomer, at least about 50% by weight of the thermoplastic elastomer, at least about 55% by weight of the thermoplastic elastomer, at least about 60% by weight of the thermoplastic elastomer., at least about 65% by weight of the thermoplastic elastomer, or at least about 70% by weight of the thermoplastic elastomer. Additionally, a styrene block copolymer can comprise no greater than about 99% by weight of the thermoplastic elastomer, no greater than about 95% by weight of the thermoplastic elastomer, no greater than about 90% by weight of the thermoplastic elastomer, no greater than about 85% by weight of the thermoplastic elastomer, no greater than about 80% by weight of the thermoplastic elastomer, or no greater than about 75% by weight of the thermoplastic elastomer. In some cases, a styrene block copolymer can comprise all or substantially all of the thermoplastic elastomer. In an illustrative example, a styrene block copolymer can comprise from about 50% by weight to about 99% by weight of the thermoplastic elastomer. In another illustrative example, a styrene block copolymer can comprise from about 50% by weigh to about 75% by weight of the thermoplastic elastomer. In an additional illustrative example, a styrene block copolymer can comprise from about 75% by weight to about 99% by weight of the thermoplastic elastomer.

Optionally, the thermoplastic elastomer can have a molecular weight of at least about 50,000; at least about 75,000; at least about 100,000; at least about 125,000; at least about 150,000; at least about 175,000; at least about 200,000; at least about 225,000; at least about 250,000; at least about 275,000; or at least about 300,000. In addition, the thermoplastic elastomer can have a molecular weight no greater than about 550,000; no greater than about 525,000; no greater than about 500,000; no greater than about 475,000; no greater than about 450,000; no greater than about 425,000; no greater than about 400,000; no greater than about 375,000; no greater than about 350,000; or no greater than about 325,000. In an illustrative example, the thermoplastic elastomer can have a molecular weight from about 40,000 to about 550,000. In another illustrative example, the thermoplastic elastomer can have a molecular weight from about 50,000 to about 300,000. In an additional illustrative example, the thermoplastic elastomer can have a molecular weight from about 300,000 to about 500,000.

The composition included in the one or more polymeric materials of the powder 104 can also include a resin component that can increase the interfacial interaction between the copolyester ether and the thermoplastic elastomer included in the composition. The resin component can be nonreactive with the copolyester ether, the thermoplastic elastomer, or both, in that the resin component does not form a new molecular structure with the copolyester ether or the thermoplastic elastomer via covalent bonding at standard temperature and pressure (20 °C and 1 atm).

The resin component can include a hydrocarbon resin. In some cases, the resin component can include a hydrogenated hydrocarbon resin. Additionally, the resin component can include an aliphatic structure. Optionally, the resin component can include an aromatic structure. Further, in some instances, the resin component can include a mixture of an aliphatic structure and an aromatic structure. In an illustrative example, the resin component can include a terpene resin. In another illustrative example, the resin component can include a rosin ester. In an additional illustrative example, the resin component can include an ester amide resin. In a further illustrative example, the resin component can include a polyester resin having a molecular weight from about 2000 to about 5000. In a particular illustrative example, the resin component can include a mixture of one or more of a terpene resin, a rosin ester, an ester amide resin, or a polyester resin having a molecular weight from about 2000 to 5000. A hydrocarbon resin, a hydrogenated hydrocarbon resin, or both can be present in the resin component in an amount of at least about 50% by weight, at least about 55% by weight, at least about 60% by weight, at least about 65% by weight, or at least about 70% by weight. Also, a hydrocarbon resin, a hydrogenated resin, or both can be present in the resin component in an amount no greater than about 99% by weight, no greater than about 95% by weight, no greater than about 90% by weight, no greater than about 85% by weight, no greater than about 80% by weight, or no greater than about 75% by weight. In some examples, a hydrocarbon resin, a hydrogenated hydrocarbon resin, or both can comprise all or substantially all of the resin component.

The copolyester ether can be present in the composition included in the one or more polymeric materials of the powder 104 in an amount of at least about 15% by weight, at least about 20% by weight, at least about 25% by weight, at least about 30% by weight, at least about 35% by weight, at least about 40% by weight, at least about 45% by weight, or at least about 50% by weight. Additionally, the copolyester ether can be present in the composition included in the one or more polymeric materials of the powder 104 in an amount no greater than about 99% by weight, no greater than about 95% by weight, no greater than about 90% by weight, no greater than about 85% by weight, no greater than about 80% by weight, no greater than about 75% by weight, no greater than about 70% by weight, no greater than about 65% by weight, no greater than about 60% by weight, or no greater than about 55% by weight. Optionally, the copolyester ether can comprise all or substantially all of the composition included in the one or more polymeric materials of the powder 104. In an illustrative example, the copolyester ether can be present in the composition included in the one or more polymeric materials of the powder 104 in an amount from about 20% by weight to about 98% by weight. In an additional illustrative embodiment, the copolyester ether can be present in the composition included in the one or more polymeric materials of the powder 104 in an amount from about 30% by weight to about 90% by weight. In another illustrative example, the copolyester ether can be present in the composition included in the one or more polymeric materials of the powder 104 in an amount from about 55% by weight to about 80% by weight.

The thermoplastic elastomer included in the composition of the one or more polymeric materials of the powder can be present in an amount of at least about 1% by weight, at least about 5% by weight, at least about 10% by weight, at least about 15% by weight, at least about 20% by weight, at least about 30% by weight, at least about 40% by weight, or at least about 50% by weight. In addition, the thermoplastic elastomer included in the composition of the one or more polymeric materials of the powder 104 can be present in an amount no greater than about 90% by weight, no greater than about 85% by weight, no greater than about 80% by weight, no greater than about 75% by weight, no greater than about 70% by weight, no greater than about 65% by weight, or no greater than about 60% by weight. In an illustrative example, the thermoplastic elastomer included in the composition of the one or more polymeric materials of the powder 104 can be present in an amount from about 1% by weight to about 90% by weight. In another illustrative example, the thermoplastic elastomer included in the composition of the one or more polymeric materials of the powder 104 can be present in an amount from about 5% by weight to about 40% by weight. In an additional illustrative example, the thermoplastic elastomer included in the composition of the one or more polymeric materials of the powder 104 can be present in an amount from about 15% by weight to about 25% by weight. In a further illustrative example, the thermoplastic elastomer included in the composition of the one or more polymeric materials of the powder 104 can be present in an amount from about 40% by weight to about 80% by weight.

The resin component included in the composition included in the one or more polymeric materials of the powder 104 can be present in an amount of at least about 1% by weight, at least about 2% by weight, at least about 3% by weight, at least about 4% by weight, at least about 5% by weight, at least about 6% by weight, or at least about 7% by weight. Additionally, the resin component included in the composition included in the one or more polymeric materials of the powder 104 can be present in an amount no greater than about 15% by weight, no greater than about 14% by weight, no greater than about 13% by weight, no greater than about 12% by weight, no greater than about 11% by weight, no greater than about 10% by weight, no greater than about 9% by weight, or no greater than about 8% by weight. In an illustrative example, the resin component included in the composition included in the one or more polymeric materials of the powder 104 can be present in an amount from about 1% by weight to about 15% by weight. In another illustrative example, the resin component included in the composition included in the one or more polymeric materials of the powder 104 can be present in an amount from about 2% by weight to about 10% by weight. In an additional illustrative example, the resin component included in the composition included in the one or more polymeric materials of the powder 104 can be present in an amount from about 1% by weight to about 5% by weight. In a further illustrative example, the resin component included in the composition included in the one or more polymeric materials of the powder 104 can be present in an amount from about 5% by weight to about 10% by weight.

The composition included in the one or more polymeric materials of the powder 104 can be comprised of the copolyester ether and be free or substantially free of the thermoplastic elastomer and free or substantially free of the resin component. In implementations where the composition included in the one or more polymeric materials of the powder 104 can be comprised of the copolyester ether and be free or substantially free of the thermoplastic elastomer and the resin component, the composition included in the one or more polymeric materials of the powder 104 can be comprised of at least about 50% by weight of the copolyester ether, at least about 55% by weight of the copolyester ether, at least about 60% by weight of the copolyester ether, at least about 65% by weight of the copolyester ether, at least about 70% by weight of the copolyester ether. Additionally, in implementations where the composition included in the one or more polymeric materials of the powder 104 can be comprised of the copolyester ether and be free or substantially free of the thermoplastic elastomer and the resin component, the composition can include no greater than about 99% by weight of the copolyester ether, no greater than about 95% by weight of the copolyester ether, no greater than about 90% by weight of the copolyester ether, no greater than about 85% by weight of the copolyester ether, no greater than about 80% by weight of the copolyester ether, or no greater than about 75% by weight of the copolyester ether. Optionally, in implementations where the composition included in the one or more polymeric materials of the powder 104 can be comprised of the copolyester ether and be free or substantially free of the thermoplastic elastomer and the resin component, all or substantially all of the composition can be comprised of the copolyester ether. In an illustrative example where the composition included in the one or more polymeric materials of the powder 104 can be comprised of the copolyester ether and be free or substantially free of the thermoplastic elastomer and the resin component, the composition can include from about 50% by weight to about 99% by weight of the copolyester ether. In another illustrative example where the composition included in the one or more polymeric materials of the powder 104 can be comprised of the copolyester ether and be free or substantially free of the thermoplastic elastomer and the resin component, the composition can include from about 50% by weight to about 75% by weight of the copolyester ether. In an additional illustrative example where the composition included in the one or more polymeric materials of the powder 104 can be comprised of the copolyester ether and be free or substantially free of the thermoplastic elastomer and the resin component, the composition can include from about 75% by weight to about 99% by weight of the copolyester ether.

In some implementations, the composition included in the one or more polymeric materials of the powder 104 can be comprised of a combination of the copolyester ether, the thermoplastic elastomer, and the resin component. In implementations where the composition included in the one or more polymeric materials of the powder 104 can be comprised of a combination of the copolyester ether, the thermoplastic elastomer, and the resin component, the composition included in the one or more polymeric materials of the powder 104 can be comprised of at least about 50% by weight of the copolyester ether, at least about 55% by weight of the copolyester ether, at least about 60% by weight of the copolyester ether, at least about 65% by weight of the copolyester ether, at least about 70% by weight of the copolyester ether. Additionally, in implementations where the composition included in the one or more polymeric materials of the powder 104 can be comprised of a combination of the copolyester ether, the thermoplastic elastomer, and the resin component, the composition can include no greater than about 99% by weight of the copolyester ether, no greater than about 95% by weight of the copolyester ether, no greater than about 90% by weight of the copolyester ether, no greater than about 85% by weight of the copolyester ether, no greater than about 80% by weight of the copolyester ether, or no greater than about 75% by weight of the copolyester ether. Optionally, in implementations where the composition included in the one or more polymeric materials of the powder 104 can be comprised of a combination of the copolyester ether, the thermoplastic elastomer, and the resin component, all or substantially all of the composition can be comprised of the copolyester ether, the thermoplastic elastomer, and the resin component. In an illustrative example where the composition included in the one or more polymeric materials of the powder 104 can be comprised of a combination of the copolyester ether, the thermoplastic elastomer, and the resin component, the composition can include from about 50% by weight to about 99% by weight of the copolyester ether. In another illustrative example where the composition included in the one or more polymeric materials of the powder 104 can be comprised of a combination of the copolyester ether, the thermoplastic elastomer, and the resin component, the composition can include from about 50% by weight to about 75% by weight of the copolyester ether. In an additional illustrative example where the composition included in the one or more polymeric materials of the powder 104 can be comprised of a combination of the copolyester ether, the thermoplastic elastomer, and the resin component, the composition can include from about 75% by weight to about 99% by weight of the copolyester ether.

Additives of the composition included in the one or more polymeric materials of the powder 104 can also include one or more plasticizers. For example, the composition can include a phthalate plasticizer. To illustrate, the composition can include a dioctyl phthalate plasticizer. The one or more plasticizers can be present in the composition in an amount of at least about 0.5% by weight, at least about 1% by weight, at least about 2% by weight, at least about 3% by weight, at least about 4% by weight, or at least about 5% by weight. In addition, the one or more plasticizers can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include one or more plasticizers present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of one or more plasticizers.

Additives of the composition included in the one or more polymeric materials of the powder 104 can include one or more coloring agents. For example, the composition included in the one or more polymeric materials of the powder 104 can include one or more dyes. In another example, the composition included in the one or more polymeric materials of the powder 104 can include one or more pigments. In some cases, the one or more coloring agents can include one or more inorganic colorants. In other cases, the one or more coloring agents can include one or more organic pigments. In an illustrative example, the one or more coloring agents can include titanium dioxide. In another illustrative example, the one or more coloring agents can include calcium carbonate. In an additional illustrative example, the one or more coloring agents can include talc. In a further illustrative example, the one or more coloring agents can include carbon black.

Optionally, the one or more coloring agents can be present in the composition included in the one or more polymeric materials of the powder 104 in an amount of at least about 0.5% by weight of the composition, at least about 1% by weight of the composition, at least about 5% by weight of the composition, at least about 10% by weight of the composition, at least about 15% by weight of the composition, at least about 20% by weight of the composition, or at least about 25% by weight of the composition. Also, the one or more coloring agents can be present in the composition included in the one or more polymeric materials of the powder 104 in an amount no greater than about 50% by weight of the composition, no greater than about 45% by weight of the composition, no greater than about 40% by weight of the composition, no greater than about 35% by weight of the composition, no greater than about 30% by weight of the composition. In an illustrative example, the one or more coloring agents can be present in the composition included in the one or more polymeric materials of the powder 104 in an amount from about 0.5% by weight of the composition to about 50% by weight of the composition. In another illustrative example, the one or more coloring agents can be present in the composition included in the one or more polymeric materials of the powder 104 in an amount from about 1% by weight of the composition to about 10% by weight of the composition. In an additional illustrative example, the one or more coloring agents can be present in the composition included in the one or more polymeric materials of the powder 104 in an amount from about 10% by weight of the composition to about 25% by weight of the composition. In a further illustrative example, the one or more coloring agents can be present in the composition included in the one or more polymeric materials of the powder 104 in an amount from about 25% by weight of the composition to about 35% by weight of the composition. In still another illustrative example, the one or more coloring agents can be present in the composition included in the one or more polymeric materials of the powder 104 in an amount from about 35% by weight of the composition to about 50% by weight of the composition.

Additives of the composition included in the one or more polymeric materials of the powder 104 can include one or more heat conducting materials. For example, the composition included in the one or more polymeric materials of the powder 104 can include boron nitride. In another example, the composition included in the one or more polymeric materials of the powder 104 can include carbon nanotubes. Optionally, the one or more heat conducting materials can be present in the composition included in the one or more polymeric materials of the powder 104 in an amount of at least about 0.5% by weight of the composition, at least about 1% by weight of the composition, at least about 5% by weight of the composition, at least about 10% by weight of the composition, at least about 15% by weight of the composition, at least about 20% by weight of the composition, or at least about 25% by weight of the composition. Also, the one or more heat conducting materials can be present in the composition included in the one or more polymeric materials of the powder 104 in an amount no greater than about 50% by weight of the composition, no greater than about 45% by weight of the composition, no greater than about 40% by weight of the composition, no greater than about 35% by weight of the composition, no greater than about 30% by weight of the composition. In an illustrative example, the one or more heat conducting materials can be present in the composition included in the one or more polymeric materials of the powder 104 in an amount from about 0.5% by weight of the composition to about 50% by weight of the composition. In another illustrative example, the one or more heat conducting materials can be present in the composition included in the one or more polymeric materials of the powder 104 in an amount from about 1% by weight of the composition to about 10% by weight of the composition. In an additional illustrative example, the one or more heat conducting materials can be present in the composition included in the one or more polymeric materials of the powder 104 in an amount from about 10% by weight of the composition to about 25% by weight of the composition. In a further illustrative example, the one or more heat conducting materials can be present in the composition included in the one or more polymeric materials of the powder 104 in an amount from about 25% by weight of the composition to about 35% by weight of the composition. In still another illustrative example, the one or more heat conducting materials can be present in the composition included in the one or more polymeric materials of the powder 104 in an amount from about 35% by weight of the composition to about 50% by weight of the composition.

Additives of the composition included in the one or more polymeric materials of the powder 104 can include one or more x-ray absorbing materials. As used herein, x-ray absorbing materials can absorb a greater amount of electromagnetic radiation having wavelengths from about 0.01 nm to about 10 nm than non-x-ray absorbing materials. For example, the composition included in the one or more polymeric materials of the powder 104 can include tungsten carbide. In another example, the composition included in the one or more polymeric materials of the powder 104 can include lead. Additionally, the composition included in the one or more polymeric materials of the powder 104 can include copper.

Optionally, the one or more x-ray absorbing materials can be present in the composition included in the one or more polymeric materials of the powder 104 in an amount of at least about 0.5% by weight of the composition, at least about 1% by weight of the composition, at least about 5% by weight of the composition, at least about 10% by weight of the composition, at least about 15% by weight of the composition, at least about 20% by weight of the composition, or at least about 25% by weight of the composition. Also, the one or more x-ray absorbing materials can be present in the composition included in the one or more polymeric materials of the powder 104 in an amount no greater than about 50% by weight of the composition, no greater than about 45% by weight of the composition, no greater than about 40% by weight of the composition, no greater than about 35% by weight of the composition, no greater than about 30% by weight of the composition. In an illustrative example, the one or more x-ray absorbing materials can be present in the composition included in the one or more polymeric materials of the powder 104 in an amount from about 0.5% by weight of the composition to about 50% by weight of the composition. In another illustrative example, the one or more x-ray absorbing materials can be present in the composition included in the one or more polymeric materials of the powder 104 in an amount from about 1% by weight of the composition to about 10% by weight of the composition. In an additional illustrative example, the one or more x-ray absorbing materials can be present in the composition included in the one or more polymeric materials of the powder 104 in an amount from about 10% by weight of the composition to about 25% by weight of the composition. In a further illustrative example, the one or more x-ray absorbing materials can be present in the composition included in the one or more polymeric materials of the powder 104 in an amount from about 25% by weight of the composition to about 35% by weight of the composition. In still another illustrative example, the one or more x-ray absorbing materials can be present in the composition included in the one or more polymeric materials of the powder 104 in an amount from about 35% by weight of the composition to about 50% by weight of the composition.

Additives of the composition included in the one or more polymeric materials of the powder 104 can include one or more fluorescent additives or one or more phosphorescent additives. Optionally, the one or more fluorescent additives or one or more phosphorescent additives can be present in the composition included in the one or more polymeric materials of the powder 104 in an amount of at least about 0.5% by weight of the composition, at least about 1 % by weight of the composition, at least about 5% by weight of the composition, at least about 10% by weight of the composition, at least about 15% by weight of the composition, at least about 20% by weight of the composition, or at least about 25% by weight of the composition. Also, the one or more fluorescent additives or one or more phosphorescent additives can be present in the composition included in the one or more polymeric materials of the powder 104 in an amount no greater than about 50% by weight of the composition, no greater than about 45% by weight of the composition, no greater than about 40% by weight of the composition, no greater than about 35% by weight of the composition, no greater than about 30% by weight of the composition. In an illustrative example, the one or more fluorescent additives or one or more phosphorescent additives can be present in the composition included in the one or more polymeric materials of the powder 104 in an amount from about 0.5% by weight of the composition to about 50% by weight of the composition. In another illustrative example, the one or more fluorescent additives or one or more phosphorescent additives can be present in the composition included in the one or more polymeric materials of the powder 104 in an amount from about 1 % by weight of the composition to about 10% by weight of the composition. In an additional illustrative example, the one or more fluorescent additives or one or more phosphorescent additives can be present in the composition included in the one or more polymeric materials of the powder 104 in an amount from about 10% by weight of the composition to about 25% by weight of the composition. In a further illustrative example, the one or more fluorescent additives or one or more phosphorescent additives can be present in the composition included in the one or more polymeric materials of the powder 104 in an amount from about 25% by weight of the composition to about 35% by weight of the composition. In still another illustrative example, the one or more fluorescent additives or one or more phosphorescent additives can be present in the composition included in the one or more polymeric materials of the powder 104 in an amount from about 35% by weight of the composition to about 50% by weight of the composition.

Additives of the composition included in the one or more polymeric materials of the powder 104 can also include one or more oils. For example, the composition can include an oil having a molecular weight no greater than about 1,000 g/mol, no greater than about 900 g/mol, no greater than about 800 g/mol, no greater than about 700 g/mol, or no greater than about 600 g/mol. In some cases, the molecular weight of an oil present in the composition can be at least about 100 g/mol, at least about 200 g/mol, at least about 300 g/mol, at least about 400 g/mol, or at least about 500 g/mol. The molecular weight of one or more oils present in the composition can be from about 100 g/mol to about 1000 g/mol, from about 100 g/mol to about 500 g/mol, from about 300 g/mol to about 700 g/mol, or from about 500 g/mol to about 1000 g/mol In an illustrative example, the composition can include one or more oils present in an amount from about 0.3% by weight to about 15% by weight, from about 1 % by weight to about 10% by weight, from about 1 % by weight to about 5% by weight, from about 3% by weight to about 7% by weight, or from about 6% by weight to about 10% by weight. Alternatively, the composition can be free or substantially free of one or more oils.

Additives of the composition included in the one or more polymeric materials of the powder 104 can also include polyvinyl chloride. Polyvinyl chloride can be present in the composition in an amount of at least about 0.5% by weight, at least about 1% by weight, at least about 2% by weight, at least about 3% by weight, at least about 4% by weight, or at least about 5% by weight. In addition, polyvinyl chloride can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include polyvinyl chloride present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of polyvinyl chloride.

Additives of the composition included in the one or more polymeric materials of the powder 104 can also include one or more polycarbonates. The one or more polycarbonates can be present in the composition in an amount of at least about 0.5% by weight, at least about 1% by weight, at least about 2% by weight, at least about 3% by weight, at least about 4% by weight, or at least about 5% by weight. In addition, the one or more polycarbonates can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include one or more polycarbonates present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of one or more polycarbonates.

Additives of the composition included in the one or more polymeric materials of the powder 104 can also include barium sulfate. Barium sulfate can be present in the composition in an amount of at least about 0.5% by weight, at least about 1% by weight, at least about 2% by weight, at least about 3% by weight, at least about 4% by weight, or at least about 5% by weight. In addition, barium sulfate can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include barium sulfate present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of barium sulfate.

Additives of the composition included in the one or more polymeric materials of the powder 104 can also include an ethylene-acrylate ester-maleic anhydride copolymer. The ethylene-acrylate ester-maleic anhydride copolymer can be present in the composition in an amount of at least about 0.5% by weight, at least about 1% by weight, at least about 2% by weight, at least about 3% by weight, at least about 4% by weight, or at least about 5% by weight. In addition, the ethylene-acrylate ester-maleic anhydride copolymer can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include an ethylene-acrylate ester-maleic anhydride copolymer present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of an ethylene-acrylate ester-maleic anhydride copolymer.

Additives of the composition included in the one or more polymeric materials of the powder 104 can also include fiberglass. Fiberglass can be present in the composition in an amount of at least about 0.5% by weight, at least about 1% by weight, at least about 2% by weight, at least about 3% by weight, at least about 4% by weight, or at least about 5% by weight. In addition, fiberglass can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include fiberglass present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of fiberglass.

Additives of the composition included in the one or more polymeric materials of the powder 104 can also include one or more epoxy-containing compounds. The one or more epoxy-containing compounds can be present in the composition in an amount of at least about 0.5% by weight, at least about 1% by weight, at least about 2% by weight, at least about 3% by weight, at least about 4% by weight, or at least about 5% by weight. In addition, the one or more epoxy-containing compounds can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include one or more epoxy-containing compounds present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of one or more epoxy-containing compounds.

Additives of the composition included in the one or more polymeric materials of the powder 104 can also include one or more polyamides. The one or more polyamides can be present in the composition in an amount of at least about 0.5% by weight, at least about 1% by weight, at least about 2% by weight, at least about 3% by weight, at least about 4% by weight, or at least about 5% by weight. In addition, the one or more polyamides can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include one or more polyamides present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of one or more polyamides.

Additives of the composition included in the one or more polymeric materials of the powder 104 can also include one or more polyacrylates. The one or more polyacrylates can be present in the composition in an amount of at least about 0.5% by weight, at least about 1% by weight, at least about 2% by weight, at least about 3% by weight, at least about 4% by weight, or at least about 5% by weight. In addition, the one or more polyacrylates can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include one or more polyacrylates present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of one or more polyacrylates.

Additives of the composition included in the one or more polymeric materials of the powder 104 can also include one or more lactic acid-based polymers. The one or more lactic acid-based polymers can be present in the composition in an amount of at least about 0.5% by weight, at least about 1% by weight, at least about 2% by weight, at least about 3% by weight, at least about 4% by weight, or at least about 5% by weight. In addition, the one or more lactic acid-based polymers can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include one or more lactic acid-based polymers present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of one or more lactic acid-based polymers.

Additives of the composition included in the one or more polymeric materials of the powder 104 can also include one or more cross-linking agents. A cross-linking agent can be a substance that facilitates, promotes, or regulates intermolecular covalent bonding between polymer chains. The one or more cross-linking agents can be present in the composition in an amount of at least about 0.5% by weight, at least about 1% by weight, at least about 2% by weight, at least about 3% by weight, at least about 4% by weight, or at least about 5% by weight. In addition, the one or more cross-linking agents can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include one or more cross-linking agents present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of one or more cross-linking agents.

Additives of the composition included in the one or more polymeric materials of the powder 104 can also include one or more flame retardants. The one or more flame retardants can be present in the composition in an amount of at least about 0.5% by weight, at least about 1% by weight, at least about 2% by weight, at least about 3% by weight, at least about 4% by weight, or at least about 5% by weight. In addition, the one or more flame retardants can be present in the composition in an amount no greater than about 12% by weight, no greater than about 10% by weight, no greater than about 9% by weight, no greater than about 8% by weight, no greater than about 7% by weight, or no greater than about 6% by weight. In an illustrative example, the composition can include one or more flame retardants present in an amount from about 0.3% by weight to about 15% by weight, from about 1% by weight to about 10% by weight, from about 1% by weight to about 5% by weight, from about 3% by weight to about 7% by weight, or from about 6% by weight to about 10% by weight. Alternatively, the composition can be free or substantially free of one or more flame retardants.

The one or more polymeric materials of the powder 104 can also include one or more additives. In some cases, the additive can be a branching agent based on the acid component. For example, the branching can be based on a polyprotic acid. To illustrate, the branching agent can include a polyprotic acid having at least three carboxyl groups and from 3 to 60 carbon atoms. In other cases, the additive can be a branching agent based on the glycol component. In an example, the branching agent can include a polyol having at least three hydroxyl groups and from 3 to 60 carbon atoms. Additionally, the branching agent can be based on esters of dibasic acids or esters of polyhydric alcohols. Furthermore, the polyester segment, the polyether segment, or both of the composition included in the powder can include a branching agent. In some instances, the branching agent can include trimellitic acid, trimellitic anhydride, trimesic acid, trimethylol ethane, trimethylol propane, trimer acid, pyromellitic dianhydride, glycerol, trimethylolpropane, or pentaerythritol.

When the branching agent is based on a polyprotic acid, the acid component can include from about 0.1 mole % to about 1.5 mole % of the branching agent. Additionally, when the branching agent is based on a polyprotic acid, the acid component can include from about 0.1 mole % to about 1.5 mole % of the branching agent. In situations when the branching agent is based on a polyol, the glycol component can include from about 0.1 mole % to about 1.5 mole % of the branching agent. Further, when the branching agent is based on a polyol, the glycol component can include from about 0.1 mole % to about 1.5 mole % of the branching agent.

Optionally, polymeric material of the powder 104 can include additional components. For example, a polymeric material of the powder 104 can include one or more antioxidants. To illustrate, a polymeric material included in the powder 104 can include a phenolic antioxidant. In a particular example, a polymeric material of the powder 104 can include one or more antioxidants having one or more of an acid group, a hydroxyl group, or an ester group. Additionally, a polymeric material of the powder 104 can include one or more stabilizers.

In an illustrative example, a polymeric material included in the powder 104 can include 100 mole % of an acid component and 100 mole % of a glycol component. In particular, the acid component can include units derived from 1,4-cyclohexanedicarboxylic acid. In some cases, the acid component can include from about 80 mole % to about 90 mole % of units derived from a trans isomer of 1,4-cyclohexandicarboxylic acid. Additionally, the acid component can include from 10 mole % to about 20 mole % of units derived from a cis isomer of 1,4-cyclohexanedicarboxylic acid. Further, the glycol component can include from about 85 mole % to about 95 mole % of units derived 1,4-cyclohexanedimethanol and from about 5 mole % to about 15 mole % of units derived from polytetremethylene ether glycol. The glycol component can include from about 60 mole % to about 100 mole % of units derived from the trans isomer of 1,4-cyclohexanedimethanol. Also, the glycol component can include units derived from polytetramethylene ether glycol having a molecular weight from about 500 to about 1100.

In another illustrative example, a polymeric material included in the powder 104 can include a copolyester ether having an ester segment and an ether segment. The ester segment can include units derived from an aliphatic dicarboxylic acid, such as 1,4-cyclohexane dicarboxylic acid, and units derived from a diol, such as 1,4-cyclohexane dimethanol. The ether segment can include a polyalkylene glycol. The ester segment can comprise from about 75% by weight to about 85% by weight of the copolyester ether and the ether segment can comprise from about 15% by weight to about 25% by weight of the copolyester ether segment. The polymeric material can also include a thermoplastic elastomer including a styrene block copolymer and a hydrocarbon-based resin. The copolyester ether can comprise from about 55% by weight to about 80% by weight of the polymeric material, the thermoplastic elastomer can comprise from about 15% by weight to about 25% by weight of the polymeric material, and the thermoplastic resin can comprise from about 2% by weight to about 10% by weight of the polymeric material.

The powder 104 can include at least about 40 % by weight of the one or more polymeric materials, at least about 45% by weight of the one or more polymeric materials, at least about 50% by weight of the one or more polymeric materials, at least about 55% by weight of the one or more polymeric materials, at least about 60% by weight of the one or more polymeric materials, at least about 65% by weight of the one or more polymeric materials, at least about 70 % by weight of the one or more polymeric materials, at least about 75% by weight of the one or more polymeric materials, or at least about 80 % by weight of the one or more polymeric materials. Additionally, the powder 104 can include no greater than about 99.99 % by weight of the one or more polymeric materials, no greater than about 99.95 % by weight of the one or more polymeric materials, no greater than about 99.9% by weight of the one or more polymeric materials, no greater than about 99.5 % by weight of the one or more polymeric materials, no greater than about 99 % by weight of the one or more polymeric materials, no greater than about 95% by weight of the one or more polymeric materials, no greater than about 90% by weight of the one or more polymeric materials, or no greater than about 85% by weight of the one or more polymeric materials. In an illustrative example, the powder 104 can include from about 40 % by weight to about 99.99 % by weight of the one or more polymeric materials. In another illustrative example, the powder 104 can include from about 80 % by weight to about 99.9 % by weight of the one or more polymeric materials. Further, all or substantially all of the powder 104 can be comprised of the one or more polymeric materials.

The powder 104 can also include one or more additives, such as a flow agent. The flow agent can increase the viscosity of the powder 104 when the powder 104 is heated to the melting temperature of the powder 104. In some cases, the flow agent can include a silica-containing material. In particular, the flow agent can include an amorphous fumed silica. The powder 104 can include at least about 0.05 % by weight of the flow agent, at least about 0.1 % by weight of the flow agent, at least about 0.2 % by weight of the flow agent, at least about 0.5 % by weight of the flow agent, or at least about 0.8 % by weight of the flow agent. Additionally, the powder 104 can include no greater than about 2 % by weight of the flow agent, no greater than about 1.7 % by weight of the flow agent, no greater than about 1.5 % by weight of the flow agent, no greater than about 1.3 % by weight of the flow agent, or no greater than about 1.1% by weight of the flow agent. In an illustrative example, the powder 104 can include from about 0.01 % by weight to about 2.5 % by weight of the flow agent. In another illustrative example, the powder 104 can include from about 0.05 % by weight to about 1 % by weight of the flow agent. In an additional illustrative example, the powder 104 can include from about 0.1 % by weight to about 0.4 % by weight of the flow agent.

Although FIG. 1 illustrates one illustrative example of certain components of an additive manufacturing system usable for carrying out the techniques disclosed herein, it is to be appreciated that the configuration and inclusion of certain components shown in FIG. 1 is one, non-limiting, example of a suitable additive manufacturing system. Namely, other types and configurations of additive manufacturing systems can be utilized with the techniques and materials disclosed herein without changing the basic characteristics of the additive manufacturing system 100, and the additive manufacturing system 100 can be implemented as any suitable size for a particular industry or application, such as industrial-sized for commercial object production and/or testing.

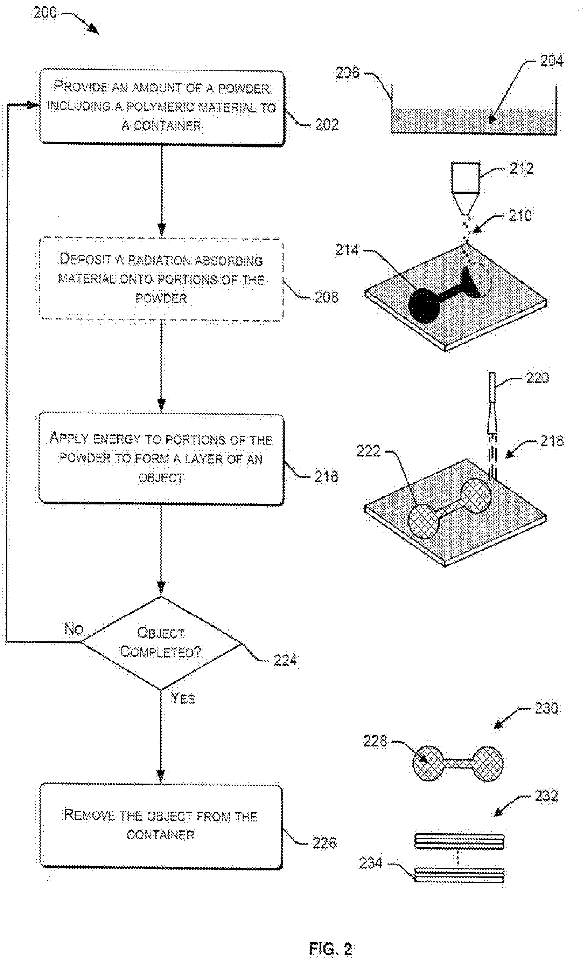

FIG. 2 is a flow diagram of an example process 200 to produce objects from a polymeric powder using an additive manufacturing system. The process 200 is illustrated as a collection of blocks in a logical flow graph, which represent a sequence of operations that can be implemented, at least in part, by an additive manufacturing system, such as the additive manufacturing system 100 of FIG. 1. In some cases, at least a portion of the operations of the process 200 can be performed under the direction of a computer-implemented control system, such as the control system 120 of FIG. 1. The order in which the operations are described is not intended to be construed as a limitation, and any number of the described blocks can be combined in any order and/or in parallel to implement the process.

At 202, the process 200 includes providing an amount of a powder 204 including a polymeric material to a container 206. The container 206 can include a bed that is a component of an additive manufacturing system, such as the bed 106 of the additive manufacturing system 100 of FIG. 1. The amount of the powder 204 can be deposited into the container 206 using a number of techniques. For example, the powder 204 deposited into the container 206 can be stored in a powder source and transferred from the powder source to the container 206. In one illustrative example, the powder 204 can be transferred from the powder source to the container 206 using a mechanism to obtain an amount of the powder 204, such as a suction mechanism, and then deposit the amount of the powder 204 into the container 206 using a sprayer or blower. In another illustrative example, the powder 204 can be transferred from the powder source by pushing an amount of the powder 204 out of the powder source and into the container 206. In some cases, at least a portion of the amount of powder 204 pushed out of the powder source can be spread substantially evenly within the container 206 using a spreader.

In some cases, before the amount of the powder 204 including a polymeric material is provided to the container 206, an amount of the polymeric material is subjected to a grinding operation to produce a powder of the polymeric material. Optionally, the grinding of the amount of the polymeric material takes place at a temperature from about 0 °C to about -200 °C. Alternatively, the powder can be produced by a precipitation process known to one of ordinary skill in the art. For example, the polymeric material can be dissolved in an appropriate solvent (e.g., butyl acetate, ethyl lactate, butyl lactate, methyl n-amyl ketone, cyclohexanone, methylene chloride, and methyl benzoate) and precipitated by either the controlled lowering of the temperature of the formed solution and/or by the controlled introduction of an appropriate anti-solvent (e.g., water, methanol, acetone, hexanes). For the dissolution step the temperature can be elevated to aid dissolution of the polymeric material. The powder of the polymeric material can include particles having a d₁₀ from about 5 microns to about 25 microns, a d₅₀ from about 35 microns to about 65 microns, and a d₉₀ from about 85 microns to about 150 microns. Alternatively, the powder of the polymeric material can include particles having a d₁₀ from about 5 microns to about 35 microns, a d₅₀ from about 35 microns to about 100 microns, and a d₉₀ from about 85 microns to about 150 microns.

The polymeric material can include units of a diacid component and units of a glycol component. In some cases, the units of the glycol component can be derived from a first glycol and a second glycol. In particular, the units of the acid component can be derived from 1,4-cyclohexane dicarboxylic acid, the first glycol can include 1,4-cyclohexanedimethanol and the second glycol can include polytetramethylene glycol. In an illustrative example, from about 5 mole% to about 35 mole% of the units of the glycol component can be derived from polytetramethylene ether glycol and from about 65 mole % to about 95 mole% of the units of the glycol component can be derived from 1,4-cyclohexanedimethanol. In addition, the polytetramethylene glycol can have a molecular weight from about 500 to about 1500. Further, in another illustrative example, the diacid component can include at least about 60 mole % of a trans isomer of 1,4-cyclohexanedicarboxylic acid. Also, the glycol component can include at least about 60 mole % of a trans isomer of 1,4-cyclohexanedimethanol.

Optionally, the polymeric material of the powder 204 can include one or more components in addition to a diacid component and a glycol component. For example, the powder 204 can include an additive that includes a branching agent. In some cases, the branching agent can be included in the diacid component and comprise from about 0.1 mole% to about 1.5 mole % of the diacid component. In other cases, the branching agent can be included in the glycol component and comprise from about 0.1 mole% to about 1.5 mole % of the glycol component.

The diacid component and the glycol component can be included in a copolyester ether component of the polymeric material. The polymeric material of the powder 204 can also include other components, such as a thermoplastic elastomer and a resin component. The thermoplastic elastomer can include a styrene block copolymer. Additionally, the resin component can include a hydrocarbon-based resin.

A polymeric material included in the powder 204 can be characterized by a number of physical properties. In some implementations, the polymeric material included in the powder 204 can include a copolyester ether and be free of a thermoplastic elastomer and free of a resin component. In these implementations, a polymeric material included in the powder 204 can have a crystalline peak melting point of at least about 185°C, at least about 188°C, at least about 190°C, at least about 192 °C, at least about 195°C, at least about 198°C, at least about 200°C, at least about 202°C, or at least about 205°C. In addition, a polymeric material included in the powder 204 that includes a copolyester ether and is free of a thermoplastic elastomer and a resin component can have a crystalline peak melting point of no greater than about 225°C, no greater than about 222°C, no greater than about 220°C, no greater than about 218°C, no greater than about 215°C, no greater than about 212°C, no greater than about 210°C, or no greater than about 208°C. In an illustrative example, a polymeric material included in the powder 204 that includes a copolyester ether and is free of a thermoplastic elastomer and a resin component can have a crystalline peak melting point from about 180°C to about 240°C. In another illustrative example, a polymeric material included in the powder 204 that includes a copolyester ether and is free of a thermoplastic elastomer and a resin component can be from about 190°C to about 220°C. In an additional illustrative example, a polymeric material included in the powder 204 that includes a copolyester ether and is free of a thermoplastic elastomer and a resin component can have a crystalline peak melting point from about 200°C to about 210°C. The crystalline peak melting point can be measured according to the American Standard for Testing and Materials (ASTM) D3418 standard at the time of filing of this patent application.

In addition, a polymeric material included in the powder 204 that includes a copolyester ether and is free of a thermoplastic elastomer and a resin component can have a crystallization temperature on cooling of at least about 120°C, at least about 122°C, at least about 125°C, at least about 128°C, at least about 130°C, at least about 132°C, at least about 135°C, at least about 138°C, or at least about 140°C. Also, a polymeric material included in the powder 204 that includes a copolyester ether and is free of a thermoplastic elastomer and a resin component can have a crystallization temperature on cooling of no greater than about 160°C, no greater than about 158°C, no greater than about 155°C, no greater than about 152°C, no greater than about 150°C, no greater than about 148°C, no greater than about 145°C, or no greater than about 142°C. In an illustrative example, a polymeric material included in the powder 204 that includes a copolyester ether and is free of a thermoplastic elastomer and a resin component can have a crystallization temperature on cooling from about 100°C to about 170°C. In another illustrative example, a polymeric material included in the powder 204 that includes a copolyester ether and is free of a thermoplastic elastomer and a resin component can have a crystallization temperature on cooling from about 120°C to about 160°C. In an additional illustrative example, a polymeric material included in the powder 204 that includes a copolyester ether and is free of a thermoplastic elastomer and a resin component can have a crystallization temperature on cooling from about 130°C to about 150°C. The crystallization temperature on cooling of a polymeric material included in the powder 204 can be measured using a differential scanning calorimeter at a scan rate of about 20°C/minute.

Further, a polymeric material included in the powder 204 that includes a copolyester ether and is free of a thermoplastic elastomer and a resin component can have a tensile stress at break of at least about 12 megapascals (MPa), at least about 14 MPa, at least about 16 MPa, at least about 18 MPa, at least about 20 MPa, or at least about 22 MPa. A polymeric material included in the powder 204 that includes a copolyester ether and is free of a thermoplastic elastomer and a resin component can also have a tensile stress at break of no greater than about 35 MPa, no greater than about 32 MPa, no greater than about 30 MPa, no greater than about 28 MPa, or no greater than about 25 MPa. In an illustrative example, a polymeric material included in the powder 204 that includes a copolyester ether and is free of a thermoplastic elastomer and a resin component can have a tensile stress at break from about 10 MPa to about 40 MPa. In another illustrative example, a polymeric material included in the powder 204 that includes a copolyester ether and is free of a thermoplastic elastomer and a resin component can have a tensile stress at break from about 15 MPa to about 30 MPa. In an additional illustrative example, a polymeric material included in the powder 204 that includes a copolyester ether and is free of a thermoplastic elastomer and a resin component can have a tensile stress at break from about 18 MPa to about 25 MPa. The tensile stress at break of a polymeric material included in the powder 204 can be measured according to the ASTM D638 standard at the time of filing of this patent application.

A polymeric material included in the powder 204 that includes a copolyester ether and is free of a thermoplastic elastomer and a resin component can also have a tensile stress at yield of at least about 5 MPa, at least about 7 MPa, at least about 10 MPa, at least about 12 MPa, or at least about 14 MPa. In addition, a polymeric material included in the powder 204 that includes a copolyester ether and is free of a thermoplastic elastomer and a resin component can have a tensile stress at yield of no greater than about 25 MPa, no greater than about 22 MPa, No greater than about 20 MPa, no greater than about 18 MPa, or no greater than about 16 MPa. In an illustrative example, a polymeric material included in the powder 204 that includes a copolyester ether and is free of a thermoplastic elastomer and a resin component can have a tensile stress at yield from about 5 MPa to about 25 MPa. In another illustrative example, a polymeric material included in the powder 204 that includes a copolyester ether and is free of a thermoplastic elastomer and a resin component can have a tensile stress at yield from about 10 MPa to about 20 MPa. In an additional illustrative example, a polymeric material included in the powder 204 that includes a copolyester ether and is free of a thermoplastic elastomer and a resin component can have a tensile stress at yield from about 12 MPa to about 16 MPa. The tensile stress at yield of a polymeric material included in the powder 204 can be measured according to the ASTM D638 standard at the time of filing of this patent application.

Also, a polymeric material included in the powder 204 that includes a copolyester ether and is free of a thermoplastic elastomer and a resin component can have an elongation at yield of at least about 28%, at least about 30%, at least about 32 %, at least about 34%, at least about 36%, or at least about 38 %. Further, a polymeric material included in the powder 204 that includes a copolyester ether and is free of a thermoplastic elastomer and a resin component can have an elongation at yield of no greater than about 50%, no greater than about 48%, no greater than about 46%, no greater than about 44%, no greater than about 42%, or no greater than about 40%. In an illustrative example, a polymeric material included in the powder 204 that includes a copolyester ether and is free of a thermoplastic elastomer and a resin component can have an elongation at yield from about 25% to about 50%. In another illustrative example, a polymeric material included in the powder 204 that includes a copolyester ether and is free of a thermoplastic elastomer and a resin component can have an elongation at yield from about 30% to about 45%. In an additional illustrative example, a polymeric material included in the powder 204 that includes a copolyester ether and is free of a thermoplastic elastomer and a resin component can have an elongation at yield from about 35% to about 42%. The elongation at yield of a polymeric material included in the powder 204 can be measured according to the ASTM D638 standard at the time of filing of this patent application.

A polymeric material included in the powder 204 that includes a copolyester ether and is free of a thermoplastic elastomer and a resin component can have an elongation at break of at least about 360%, at least about 365%, at least about 370%, at least about 375%, at least about 380%, at least about 385%, at least about 390%, at least about 395%, or at least about 400%. Additionally, a polymeric material included in the powder 204 that includes a copolyester ether and is free of a thermoplastic elastomer and a resin component can have an elongation at break of no greater than about 435%, no greater than about 430%, no greater than about 425%, no greater than about 420%, no greater than about 415%, no greater than about 410%, or no greater than about 405%. In an illustrative example, a polymeric material included in the powder 204 that includes a copolyester ether and is free of a thermoplastic elastomer and a resin component can have an elongation at break from about 350% to about 450%. In another illustrative example, a polymeric material included in the powder 204 that includes a copolyester ether and is free of a thermoplastic elastomer and a resin component can have an elongation at break from about 375% to about 425%. In an additional illustrative example, a polymeric material included in the powder 204 that includes a copolyester ether and is free of a thermoplastic elastomer and a resin component can have an elongation at break from about 390% to about 410%. The elongation at break of a polymeric material included in the powder 204 can be measured according to the ASTM D638 standard at the time of filing of this patent application.

A polymeric material included in the powder 204 that includes a copolyester ether and is free of a thermoplastic elastomer and a resin component can also have a tensile modulus of at least about 30 MPa, at least about 70 MPa, at least about 110 MPa, at least about 150 MPa, at least about 200 MPa, at least about 250 MPa, at least about 300 MPa, or at least about 350 MPa. Furthermore, a polymeric material included in the powder 204 that includes a copolyester ether and is free of a thermoplastic elastomer and a resin component can have a tensile modulus of no greater than about 650 MPa, no greater than about 600 MPa, no greater than about 550 MPa, no greater than about 500 MPa, no greater than about 450 MPa, or no greater than about 400 MPa. In an illustrative example, a polymeric material included in the powder 204 that includes a copolyester ether and is free of a thermoplastic elastomer and a resin component can have a tensile modulus from about 30 MPa to about 650 MPa. In another illustrative example, a polymeric material included in the powder 204 that includes a copolyester ether and is free of a thermoplastic elastomer and a resin component can have a tensile modulus from about 30 MPa to about 200 MPa. In an additional illustrative example, a polymeric material included in the powder 204 that includes a copolyester ether and is free of a thermoplastic elastomer and a resin component can have a tensile modulus from about 200 MPa to about 400 MPa. In still another illustrative example, a polymeric material included in the powder 204 that includes a copolyester ether and is free of a thermoplastic elastomer and a resin component can have a tensile modulus from about 400 MPa to about 650 MPa. In still a further illustrative example, a polymeric material included in the powder 204 that includes a copolyester ether and is free of a thermoplastic elastomer and a resin component can have a tensile modulus from about 150 MPa to about 200 MPa. The tensile modulus of a polymeric material included in the powder 204 can be measured according to the ASTM D638 standard at the time of filing of this patent application.

Further, a polymeric material included in the powder 204 that includes a copolyester ether and is free of a thermoplastic elastomer and a resin component can have a flexural modulus of at least about 135 MPa, at least about 138 MPa, at least about 140 MPa, at least about 142 MPa, at least about 145 MPa, at least about 148 MPa, or at least about 150 MPa. A polymeric material included in the powder 204 that includes a copolyester ether and is free of a thermoplastic elastomer and a resin component can have a flexural modulus of no greater than about 165 MPa, no greater than about 162 MPa, no greater than about 160 MPa, no greater than about 158 MPa, no greater than about 155 MPa, or no greater than about 152 MPa. In an illustrative example, a polymeric material included in the powder 204 that includes a copolyester ether and is free of a thermoplastic elastomer and a resin component can have a flexural modulus from about 130 MPa to about 170 MPa. In another illustrative example, a polymeric material included in the powder 204 that includes a copolyester ether and is free of a thermoplastic elastomer and a resin component can have a flexural modulus from about 140 MPa to about 160 MPa. In an additional illustrative example, a polymeric material included in the powder 204 that includes a copolyester ether and is free of a thermoplastic elastomer and a resin component can have a flexural modulus from about 145 MPa to about 155 MPa. The flexural modulus of a polymeric material included in the powder 204 can be measured according to the ASTM D790 standard at the time of filing of this patent application.

A polymeric material included in the powder 204 that includes a copolyester ether and is free of a thermoplastic elastomer and a resin component can have a notched Izod impact strength of at least about 30 J/m, at least about 32 J/m, at least about 34 J/m, at least about 36 J/m, at least about 38 J/m, or at least about 40 J/m. Additionally, a polymeric material included in the powder 204 that includes a copolyester ether and is free of a thermoplastic elastomer and a resin component can have a notched Izod impact strength of no greater than about 50 J/m, no greater than about 48 J/m, no greater than about 46 J/m, no greater than about 44 J/m, or no greater than about 42 J/m. In an illustrative example, a polymeric material included in the powder 204 that includes a copolyester ether and is free of a thermoplastic elastomer and a resin component can have a notched Izod impact strength from about 30 J/m to about 50 J/m. In another illustrative example, a polymeric material included in the powder 204 that includes a copolyester ether and is free of a thermoplastic elastomer and a resin component can have a notched Izod impact strength from about 35 J/m to about 45 J/m. In an additional illustrative example, a polymeric material included in the powder 204 that includes a copolyester ether and is free of a thermoplastic elastomer and a resin component can have a notched Izod impact strength from about 38 J/m to about 42 J/m. In some cases, a polymeric material included in the powder 204 that includes a copolyester ether and is free of a thermoplastic elastomer and a resin component can have a "no break" rating. That is, a specimen of the polymeric material included in the powder 204 that includes a copolyester ether and is free of a thermoplastic elastomer and a resin component may not be broken during the notched Izod test. The notched Izod impact strength of a polymeric material included in the powder 204 can be measured at a temperature of about -40 °C according to the ASTM D256 standard at the time of filing of this patent application.

Additionally, a polymeric material included in the powder 204 that includes a copolyester ether and is free of a thermoplastic elastomer and a resin component can have an inherent viscosity of at least 0.80 dL/g, at least about 0.85 dL/g, at least about 0.90 dL/g, at least about 0.92 dL/g, at least about 0.95 dL/g, at least about 0.98 dL/g, at least about 1.00 dL/g, at least about 1.02 dL/g, at least about 1.05 dL/g, at least about 1.08 dL/g, at least about 1.10 dL/g, or at least about 1.12 dL/g. A polymeric material included in the powder 204 that includes a copolyester ether and is free of a thermoplastic elastomer and a resin component can also have an inherent viscosity of no greater than about 1.50 dL/g, no greater than about 1.45 dL/g, no greater than about 1.40 dL/b, no greater than about 1.35 dL/g, no greater than about 1.30 dL/g, no greater than about 1.28 dL/g, no greater than about 1.25 dL/g, no greater than about 1.22 dL/g, no greater than about 1.20 dL/g, or no greater than about 1.18dL/g, no greater than about 1.16 dL/g, or no greater than about 1.14 dL/g. In an illustrative example, a polymeric material included in the powder 204 that includes a copolyester ether and is free of a thermoplastic elastomer and a resin component can have an inherent viscosity from about 0.8 dL/g to about 1.5 dL/g. In another illustrative example, a polymeric material included in the powder 204 that includes a copolyester ether and is free of a thermoplastic elastomer and a resin component can have an inherent viscosity from about 0.95 dL/g to about 1.35 dL/g. In an additional illustrative example, a polymeric material included in the powder 204 that includes a copolyester ether and is free of a thermoplastic elastomer and a resin component can have an inherent viscosity from about 1.00 dL/g to about 1.25 dL/g. In a further illustrative example, a polymeric material included in the powder 204 that includes a copolyester ether and is free of a thermoplastic elastomer and a resin component can have an inherent viscosity from about 1.10 dL/g to about 1.20 dL/g. The inherent viscosity of a polymeric material included in the powder 204 can be measured at about 25 °C in 100 ml of a 60/40 solution of phenol/tetrachlorethane including about 0.5 g of the polymeric material.

Optionally, at 208, the process 200 includes depositing a radiation absorbing material 210 onto portions of the powder 204. The radiation absorbing material 210 can include particles that have an increased absorption of electromagnetic energy of a specified range of wavelengths relative to electromagnetic energy having wavelengths outside of the specified range. In some cases, the radiation absorbing material 210 can have an increased absorption of electromagnetic energy having wavelengths from about 700 nm to about 12,000 nm. In an illustrative example, the radiation absorbing material 210 can have an increased absorption of electromagnetic energy having wavelengths from about 700 nm to about 2000 nm relative to the absorption of electromagnetic radiation at wavelengths less than about 700 nm or greater than 2000 nm. In another illustrative example, the radiation absorbing material 210 can have an increased absorption of electromagnetic energy having wavelengths from about 700 nm to about 1400 nm relative to the absorption of electromagnetic radiation at wavelengths less than about 700 nm or greater than 1400 nm. Optionally, the radiation absorbing material 210 can be disposed in a liquid that is deposited onto the powder 204. In an illustrative example, the radiation absorbing material 210 can be disposed in water. In another illustrative example, the radiation absorbing material can be disposed in an alcohol.

The radiation absorbing material 210 can be deposited onto the powder 204 according to a predetermined design. A dispensing device 212 can deposit the radiation absorbing material 210 onto the powder 204. In particular, the radiation absorbing material 210 can be deposited onto the powder 204 according to contours 214. The contours 214 can form the boundaries of an object produced using an additive manufacturing system. In the illustrative implementation shown in FIG. 2, the radiation absorbing material 210 is deposited along the contours 214 and also within the contours 214. In other implementations, the infill of the object can be less than approximately 100% and the radiation absorbing material 210 can be deposited partially within the contours 214. In an example, the dispensing device 212 can deposit the radiation absorbing material 210 onto the powder 204 according to the contours 214.

At 216, the process 200 includes applying energy 218 to portions of the powder 204 to form a layer of an object. The energy 218 can be applied to the portions of the powder 204 according to a predetermined design. Additionally, the energy 218 can be applied across a surface of the powder 204 that is exposed to the environment. The energy 218 can be applied to portions of the powder 204 using an energy source 220. The energy source 220 can be a laser in some cases. In other instances, the energy source 220 can be an IR lamp. Applying the energy 218 to portions of the powder 204 can cause the powder 204 to be heated and become flowable such that particles of the polymeric material included in the powder 204 are joined together. In this way, a layer 222 of an object can be formed by the melting of particles of the polymeric material included in the powder 204 that are heated by the energy 218 above a specified temperature. The specified temperature above which the polymeric material included in the powder 204 is heated can be related to the melting point of the polymeric material. The change in the polymeric material that is caused by the heating is shown in FIG. 2 by the differences in shading between the portions of the powder 204 contained within the contours 222 and the portions of the powder 204 that are external to the contours 222. In situations where the radiation absorbing material 210 is disposed on a portion of the powder 204 according to the contours 222, a greater amount of the energy 218 can be absorbed by the portions of the powder 204 on which the radiation absorbing material 210 is disposed relative to the portions of the powder 204 that are free of the radiation absorbing material 210.

At 224, the process 200 includes determining if an object is completed. When the object is completed, the process 200 can follow the "Yes" path in FIG. 2 to 226. Alternatively, when the object is not completed, the process can follow the "No" path in FIG. 2 back to 202. In situations where the process 200 returns to 202 from 224, additional iterations of operations 202, optionally 208, and 216 can be performed. For example, a first layer of an object can be completed using a first amount of the powder 204 after performing operations 202, optionally 208, and 216 and a second layer of an object can then subsequently be produced. To illustrate, after returning to 202 from 224, a second amount of the powder including the polymeric material can be provided to the container as described previously with respect to 202 and an additional amount of energy can be applied to the portions of the second amount of the powder 204 to form the second layer of the object as described previously with respect to 216. In some situations, the second layer can also be formed by depositing an additional amount of the radiation absorbing material onto the portions of the second amount of the powder 204 before the additional amount of energy is applied to the portions of the second amount of the powder 204.

Determining if an object is completed can include determining that a specified number of layers comprised of the powder 204 have been formed. For example, a computer data file can indicate that an object being formed according to the process 200 can be comprised of a particular number of layers of a material or a particular range of layers of a material. A control system can store a count of the layers completed and when the number of layers completed corresponds with the specified number of layers or is within a specified range of layers, the process 200 can follow the "Yes" path to 226. In situations where a specified number of layers has not been completed, the process 200 can follow the "No" path back to 202 in order to form an additional layer. In other instances, determining whether an object is completed can include determining if one or more dimensions of an object being formed according to the process 200 satisfy specified criteria. To illustrate, determining if the object is completed can include measuring a height of an object, a width of an object, a weight of an object, a diameter of an object, or a combination thereof, to determine if one or more dimensions of the object satisfy a condition, such as having a minimum height or a minimum weight.

At 226, the process 200 includes removing a completed object 228 from the container 204. FIG. 2 includes a top view 230 of the completed object 228 and a side view 232 of the completed object 228. The side view 232 indicates layers 234 of the completed object 228. The layers 234 can be defined by at least a partial interface between adjacent layers 234. In some cases, the interface between adjacent layers 234 of the completed object 228 can be visually apparent with or without aid to a human eye, such as a microscope.

The completed object 228 can have a composition that is at least similar to or substantially the same as that of the powder 204 used to produce the completed object 228. That is the components and the corresponding amounts of the components present in the powder 204 are at least similar to or substantially the same as the components and corresponding amounts of the components in the completed object 228. For example, the completed object 228 can include a plurality of layers of a polymeric material having units of a copolyester ether. The units of the copolyester ether can be derived from an ester component, such as units of a diacid component and units of a glycol component. In addition, the polymeric material of the completed object 228 can include units of an ether component. The completed object 228 can also include one or more additives included in the powder 204, in the polymeric material of the powder 204, or both. For example, the completed object 228 can include a silica-containing flow agent, a branching agent, or a combination thereof.

In addition, the completed object 228 can be characterized by a number of physical properties. In some cases, the values for some physical properties can be based on whether the completed object 228 is produced using a laser as the energy source 220, such as in a laser sintering process, or using an IR lamp as the energy source 220, such as in a high speed sintering process. Additionally, at least some of the physical properties of the completed object 228 can have values similar to values of the physical properties of the polymeric material included in the powder 204 that is used to produce the completed object 228.

In addition, the completed object 228 can have a tensile stress at break of at least about 5 MPa, at least about 6 MPa, at least about 8 MPa, or at least about 10 MPa. Additionally, the completed object 228 can have a tensile stress at break of no greater than 15 MPa, no greater than about 14 MPa, or no greater than about 12 MPa. In an illustrative example, the completed object 228 can have a tensile stress at break from about 2 MPa to about 20 MPa. In another illustrative example, the completed object 228 can have a tensile stress at break from about 5 MPa to about 15 MPa. In an additional illustrative example, the completed object 228 can have a tensile stress at break from about 7 MPa to about 13 MPa. The tensile stress at break of the completed object 228 can be measured according to the ASTM D638 standard at the time of filing of this patent application.

Also, the completed object 228 can have an elongation at break of at least about 1%, at least about 5%, at least about 10%, at least about 15%, at least about 20%, at least about 25%, or at least about 30%. Also, the completed object 228 can have an elongation at break of no greater than about 55%, no greater than about 50%, no greater than about 45 %, no greater than about 40 %, no greater than about 35 %, or no greater than about 30 %. In an illustrative example, the completed object 228 can have an elongation at break from about 1% to about 55%. In another illustrative example, the completed object 228 can have an elongation at break from about 10% to about 50%. In an additional illustrative example, the completed object 228 can have an elongation at break from about 12% to about 30%.

In other implementations, the completed object 228 can have an elongation at break of at least about 150%, at least about 170%, at least about 190%, at least about 210 %, or at least about 230%. Further, the completed object 228 can have an elongation at break no greater than about 350%, no greater than about 330%, no greater than about 310%, no greater than about 290%, no greater than about 270%, or no greater than about 250%. In an illustrative example, the completed object 228 can have an elongation at break from about 75% to about 350%. In an illustrative example, the completed object 228 can have an elongation at break from about 100% to about 350%. In another illustrative example, the completed object 228 can have an elongation at break from about 170% to about 300%. The elongation at break of the completed object 228 can be measured according to the ASTM D638 standard at the time of filing of this patent application.

The completed object 228 can also have a Young's Modulus of at least about 100 MPa, at least about 125 MPa, or at least about 150 MPa. Additionally, the completed object 228 can have a Young's Modulus of no greater than about 160 MPa. Further, the completed object 228 can have a Young's Modulus of at least from about 100 MPa to about 160 MPa.

The concepts described herein will be further described in the following examples with reference to the pertinent figures, which do not limit the scope of the disclosure described in the claims.

### EXAMPLES

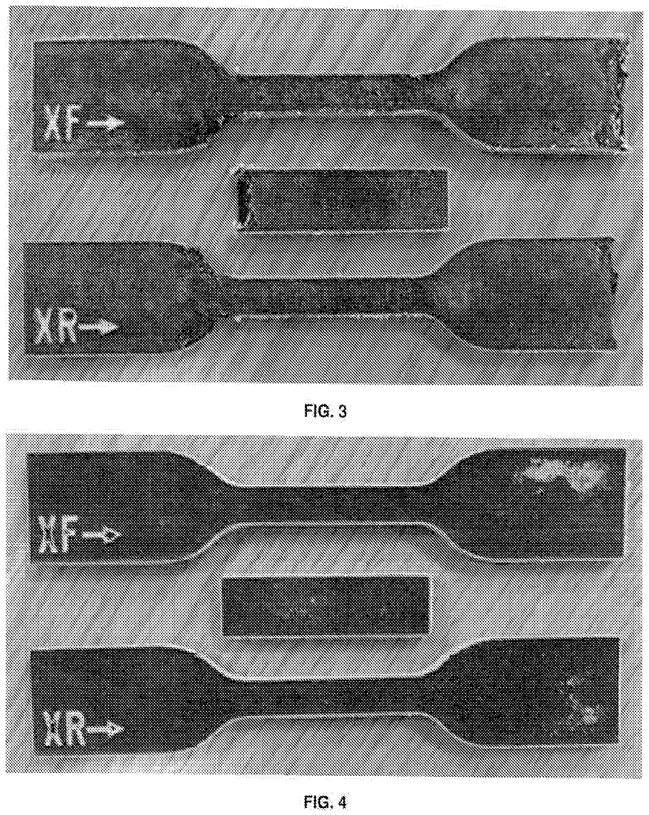

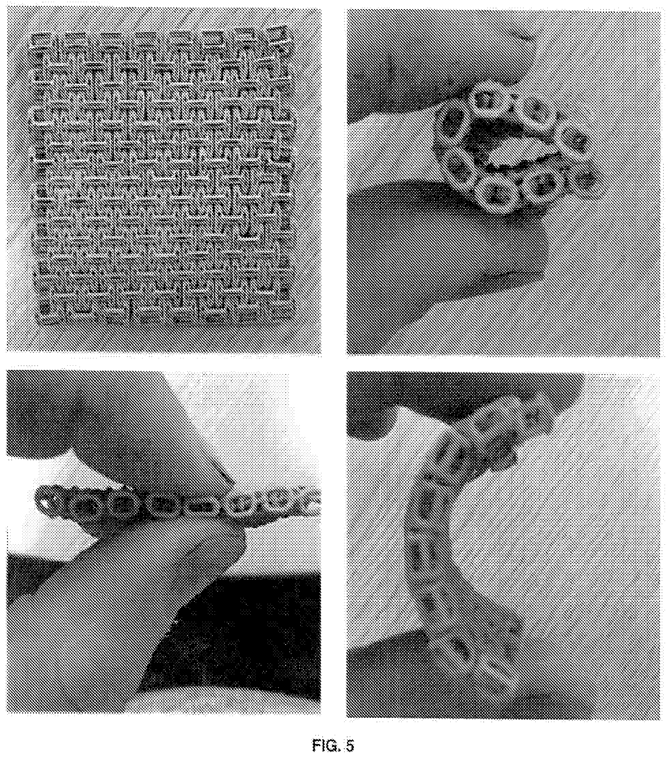

Sample objects were produced using implementations of high speed sintering processes described herein having the conditions shown in Table 1. The powder used to produce the objects included a poly(cyclohexylene cyclohexane di-carboxylate ether) (PCCE) from Eastman Chemical Company. In some cases, the powder used to produce the objects included about 99.8% by weight of the PCCE, while in other cases, all or substantially all of the powder was comprised of the PCCE. In the situations where 99.8% by weight of the powder was comprised of the PCCE, the powder also included 0.2% by weight of a fumed silica flow agent referred to as Cab-O-Sil^{®}. Additionally, the radiation absorbing material used was carbon black. FIG. 3 shows sample objects produced using a high speed sintering process having process conditions according to entry 6 in Table 1 without the fumed silica flow agent Cab-O-Sil^{®}. Also, FIG. 4 shows sample objects produced using a high speed sintering process having process conditions according to entry 6 of Table 1 with the fumed silica flow agent Cab-O-Sil^{®}. Additionally, FIG. 5 shows sample objects produced using a high speed sintering process having process conditions according to entry 7 of Table 1 with the fumed silica flow agent Cab-O-Sil^{®}.

**Table 1**

| Entry No. | Build Bed Jacket Temp. (°C) | Build Bed Overhead Temp. (°C) | Feed Bed Jacket Temp. (°C) | Feed Bed Overhead Temp (°C) | Preheat Stroke (% @ mm/s) | Sintering Stroke (% @ mm/s) |
|---|---|---|---|---|---|---|
| 1 | 170 | 180 | 120 | 140 | 100 @ 150 | 100 @ 150 |
| 2 | 170 | 177 | 120 | 137 | 100 @ 150 | 100 @ 150 |
| 3 | 170 | 175 | 120 | 135 | 100 @ 150 | 100 @ 150 |
| 4 | 170 | 175 | 120 | 128 | 100 @ 150 | 100 @ 150 |
| 5 | 170 | 175 | 120 | 125 | 100 @ 150 | 100 @ 150 |
| 6 | 170 | 175 | 120 | 122 | 100 @ 150 | 100 @ 150 |
| 7 | 170 | 175 | 120 | 120 | 100 @ 150 | 100 @ 150 |

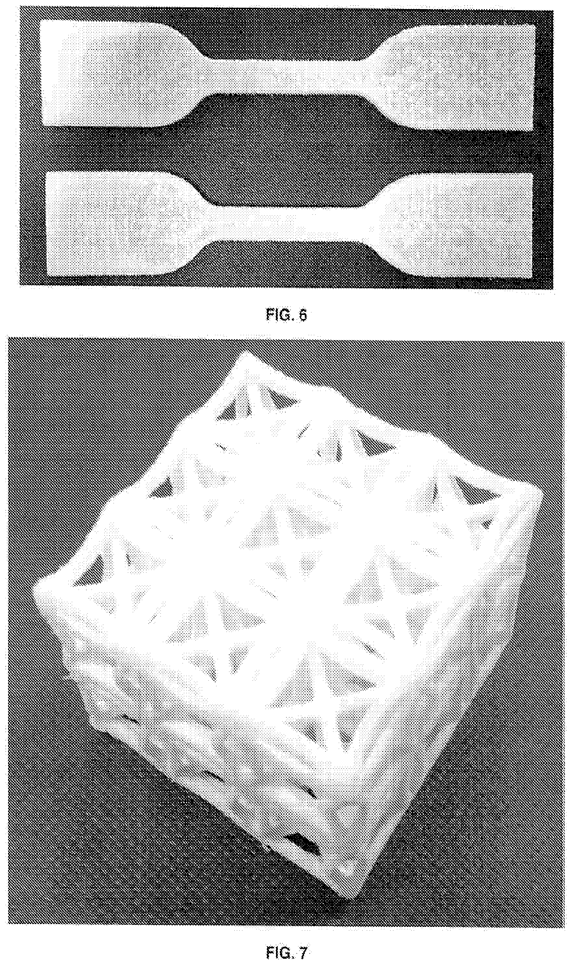

Additional sample objects were produced using implementations of laser sintering processes described herein using a laser power of about 13 W and performing a double scan of the bed of powder to form each layer. The power density was about 9383 W/cm², the scan speed was about 5000 mm/s, and the laser scan spacing was about 0.2 mm. The powder used to produce the sample objects included about 99.8% by weight of a poly(cyclohexylene cyclohexane di-carboxylate ether) (PCCE) from Eastman Chemical Company. The powder used to produce the sample objects also included about 0.2% by weight of a fumed silica flow agent referred to as Cab-O-Sil^{®}. FIG. 6 shows a set of sample objects produced using this laser sintering process and FIG. 7 shows an additional sample object produced using this laser sintering process.

Physical properties of additional samples were measured and recorded in Table 2. The physical property measurements of Table 2 represent an average of the respective physical property measurements for the samples. Table 3 includes the conditions under which the samples were produced. The samples included in the batches were produced using a poly(cyclohexylenedimethylene cyclohexane di-carboxylate ether) (PCCE) from Eastman Chemical Company. The samples of batches 1-4 and 6 were produced also using 0.2% by weight of the fumed silica flow agent Cab-O-Sil^{®}. In addition, the samples of batch number 3 were produced using powder of the PCCE that had been previously included in a bed of powder that was used to make objects, but had not actually been used to form the objects. This powder can be referred to as "recycled" powder.

The tensile stress at break, the elongation at break, and the Young's Modulus were measured according to the ASTM D638 test at the time of filing of this patent application using an extensometer for large dog bones. The tests were performed at a rate of about 0.2 inches/minute to determine the Young's Modulus (<0.5% strain) followed by performing the tests at a rate of about 2.0 inches/minute until break. The adjusted grip separation used in the tests was about 4.1 inches. The process column in Table 2 indicates whether the samples included in the batch were produced using laser sintering (LS), high speed sintering (HSS), or injection molding (IM). The injection molded samples used a mold produced according to ASTM D638 at the time of filing of this patent application using a Type 1 tensile bar having a thickness of 0.125 inches. The melt temperature was 240 °C and the mold temperature was 50 °C.

**Table 2**

| Batch No. | Number of Samples per batch | Process | Tensile Stress at Break (MPa) | Elongation at Break (%) | Young's Modulus (MPa) |
|---|---|---|---|---|---|
| 1 | 4 | LS | 9 | 9 | 154 |
| 2 | 3 | LS | 12 | 46 | 152 |
| 3 | 3 | LS | 4 | 15 | 65 |
| 4 | 2 | HSS | 11 | 20 | 152 |
| 5 | 3 | HSS | 10 | 15 | 146 |
| 6 | 1 | HSS | 10 | 27 | 139 |
| 7 | 5 | IM | 26 | 352 | 128 |

**Table 3.**

| Batch No. | Build Bed Jacket Temp. (°C) | Build Bed Overhead Temp. (°C) | Feed Bed Overhead Temp (°C) | Preheat Stroke (% @ mm/s) | Sintering Stroke (% @ mm/s) | Laser Power (W) | Single/Do uble Scan |
|---|---|---|---|---|---|---|---|
| 1 | 170 | | | | | 13 | Double |
| 2 | 170 | | | | | 13 | Double |
| 3 | 170 | | | | | 7 | Single |
| 4 | 170 | 175 | 135 | 100 @ 150 | 100 @ 150 | | |
| 5 | 170 | 180 | 140 | 100 @ 200 | 100 @ 150 | | |
| 6 | 170 | 175 | 122 | 100 @ 150 | 100 @ 150 | | |

Further samples were produced according to the conditions shown in Table 4 and the dimensions and physical properties of the samples were measured with the results also shown in Table 4. The samples were produced with a PCCE from Eastman Chemical Company using a laser sintering process. The tensile stress at break, the elongation at break, and the modulus of elasticity were measured according to the ASTM D638 test at the time of filing of this patent application using an extensometer for large dog bones having the dimensions shown in Table 4.

**Table 4.**

| Sample No. | Thickness (mm) | Width (mm) | Laser Power (W) | Tensile Strength (MPa) | Tensile Stress at Break (MPa) | Elongation at Break (%) | Young's Modulus (MPa) |
|---|---|---|---|---|---|---|---|
| 1 | 3.4 | 12.7 | 22 | 13.3 | 12.5 | 178 | - |
| 2 | 3.5 | 12.7 | 24 | 13.9 | 13.5 | 194 | - |
| 3 | 3.5 | 12.6 | 26 | 14.2 | 13.5 | 214 | - |
| 4 | 3.6 | 12.6 | 28 | 14.7 | 13.9 | 244 | |
| 5 | 3.5 | 12.6 | 30 | 15.0 | 13.9 | 246 | |
| 6 | 3.5 | 12.6 | 32 | 16.0 | 14.8 | 295 | 128 |

### Conclusion

In closing, although the various implementations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. An article comprising:
a plurality of layers including a polymeric material, the polymeric material including a copolyester ether having units of a diacid component and units of a glycol component, wherein:
the units of the diacid component are derived from at least one aliphatic dicarboxylic acid including 1,4-cyclohexanedicarboxylic acid; and
the units of the glycol component are derived from 1,4-cyclohexanedimethanol and a polyalkylene ether glycol, wherein
the article comprising the plurality of layers is obtained by selectively heating portions of a bed of powder including the polymeric material in a layer-by-layer manner according to a predetermined design using an energy source.

2. The article of claim 1, wherein the polymeric material includes a thermoplastic elastomer and a resin component.

3. The article of any one of claims 1 to 2, wherein the thermoplastic elastomer includes a styrene block copolymer and the resin component includes a hydrocarbon-based resin.

4. The article of any one of claims 1 to 2, wherein the copolyester ether comprises from about 50% by weight to about 99% by weight of the polymeric material, the thermoplastic elastomer comprises from about 1% by weight to about 50% by weight of the polymeric material, and the resin component comprises from 0% by weight to about 10% by weight of the polymeric material.

5. The article of claim 1, wherein the plurality of layers are arranged according to a predetermined design.

6. The article of any one of claims 1 to 2, wherein the polyalkylene ether glycol includes polytetramethylene ether glycol.

7. The article of claim 1, wherein the plurality of layers can include a silica-containing material.

8. An article of claim 1
wherein the polymeric material that includes the copolyester ether and is free of a thermoplastic elastomer and a resin component has an inherent viscosity from about 0.8 dL/g to about 1.5 dL/g measured at 25°C in 100ml of a 60/40 solution of phenol/ tetrachlorethane including 0.5g of the polymeric material.

9. The article of claim 8, wherein the diacid component includes at least about 60 mole % of a trans isomer of 1,4-cyclohexanedicarboxylic acid and/ or wherein the glycol component includes at least about 60 mole % of a trans isomer of 1,4-cyclohexanedimethanol.

10. The article of claim 8, wherein from about 5 mole% to about 35 mole% of the units of the glycol component are derived from polytetramethylene ether glycol and from about 65 mole % to about 95 mole % of the units of the glycol component are derived from 1,4-cyclohexanedimethanol.

11. The article of claim 8, wherein:
the polymeric material includes a branching agent, the branching agent comprising a polyprotic acid having at least three carboxyl groups and from 3 to 60 carbon atoms; and the diacid component includes from about 0.1 mole% to about 1.5 mole % of the branching agent or
wherein:
the polymeric material includes a branching agent, the branching agent comprising a polyol having at least three hydroxyl groups and from 3 to 60 carbon atoms; and
the glycol component includes from about 0.1 mole % to about 1.5 mole % of the branching agent.

12. The article of claim 8, wherein a layer of the plurality of layers has a thickness from about 0.02 mm to about 0.75 mm.

13. The article of claim 8, wherein the polymeric material has a Young's Modulus of at least about 125 MPa and the polymeric material when tested according to the ASTM D638 standard has an elongation at break from about 1% to about 45%.

14. The article of claim 8, wherein the polymeric material has a Young's Modulus from about 100 MPa to about 160 MPa and an elongation at break from about 170% to about 300% when tested according to the ASTM D638 standard.

15. The article of claim 8, wherein the polymeric material has a tensile stress at break from about 5 MPa to about 15 MPa, measured according to the ASTM D638.

## Patentansprüche

1. Artikel aufweisend:
eine Vielzahl von Schichten umfassend ein polymeres Material, das polymere Material umfasset einen Copolyesterether welcher Einheiten einer Disäurekomponente und Einheiten einer Glykolkomponente enthält, wobei:
die Einheiten der Disäurekomponente abgeleitet sind von mindestens einer aliphatischen Dicarbonsäure umfassend 1,4-Cyclohexandicarbonsäure; und
die Einheiten der Glykolkomponente abgeleitet sind von 1,4-Cyclohexandimethanol und einem Polyalkylenetherglykol, wobei
der Artikel, aufweisend eine Vielzahl von Schichten, erhalten wird durch selektives Heizen eines Teils eines Bettes aus Pulver umfassend das polymere Material in einer Schicht-für-Schicht-Weise entsprechend einem vorbestimmten Muster unter Verwendung einer Energiequelle.

2. Artikel nach Anspruch 1, wobei das polymere Material ein thermoplastisches Elastomer und eine Harzkomponente umfasst.

3. Artikel nach irgendeinem der Ansprüche 1 bis 2, wobei das thermoplastische Elastomer ein Styrol-Block-Copolymer umfasst und die Harzkomponente ein Kohlenwasserstoffbasiertes Harz umfasst.

4. Artikel nach irgendeinem der Ansprüche 1 bis 2, wobei der Copolyesterether von etwa 50 Gewichts-% bis etwa 99 Gewichts-% des polymeren Materials aufweist, das thermoplastische Elastomer von etwa 1 Gewichts-% bis etwa 50 Gewichts-% des polymeren Materials aufweist und die Harzkomponente von 0 Gewichts-% bis etwa 10 Gewichts-% des polymeren Material aufweist.

5. Artikel nach Anspruch 1, wobei die Vielzahl von Schichten entsprechend einem vorbestimmten Muster angeordnet sind.

6. Artikel nach irgendeinem der Ansprüche 1 bis 2, wobei das Polyalkylenetherglykol Polytetramethylenetherglykol umfasst.

7. Artikel nach Anspruch 1, wobei die Vielzahl an Schichten ein Silica-enthaltendes Material umfassen kann.

8. Artikel nach Anspruch 1 wobei das polymere Material, welches den Copolyesterether umfasst und frei ist von einem thermoplastischen Elastomer und einer Harzkomponente, eine inhärente Viskosität von etwa 0,8 dL/g bis etwa 1,5 dL/g besitzt, gemessen bei 25°C in 100mL einer 60/40 Lösung aus Phenol/Tetrachlorethan umfassend 0,5 g des polymeren Materials.

9. Artikel nach Anspruch 8, wobei die Disäurekomponente mindestens etwa 60 mol% eines trans-Isomer der 1,4-Cyclohexandisäure umfasst und/oder wobei die Glykolkomponente mindestens etwa 60 mol% eines trans-Isomers von 1,4-Cyclohexandimethanol umfasst.

10. Artikel nach Anspruch 8, wobei von etwa 5 mol% bis etwa 35 mol% der Einheiten der Glykolkomponente abgeleitet sind aus Polytetramethylenetherglykol und von etwa 65 mol% bis etwa 95 mol% der Einheiten der Glykolkomponente abgeleitet sind aus 1,4-Cyclohexandimethanol.

11. Artikel nach Anspruch 8, wobei:
das polymere Material ein Verzweigungsmittel umfasst, das Verzweigungsmittel aufweisend eine polyprotische Säure welche mindestens drei Carboxylgruppen und 3 bis 60 Kohlenstoffatome hat; und
die Disäurekomponente von etwa 0,1 mol% bis etwa 1,5 mol% des Verzweigungsmittels umfasst oder
wobei:
das polymere Material ein Verzweigungsmittel umfasst, das Verzweigungsmittel ein Polyol besitzend mindestens drei Hydroxygruppen und 3 bis 60 Kohlenstoffatome aufweist; und
die Glykolkomponente von etwa 0,1 mol% bis etwa 1,5 mol% des Verzweigungsmittels umfasst.

12. Artikel nach Anspruch 8, wobei eine Schicht der Vielzahl von Schichten eine Dicke von etwa 0,02 mm bis etwa 0,75 mm besitzt.

13. Artikel nach Anspruch 8, wobei das polymere Material ein Elastizitätsmodul ("Young's Modulus") von mindestens etwa 125 MPa besitzt und das polymere Material beim Testen nach dem Standard ASTM D638 eine Bruchdehnung von etwa 1% bis etwa 45% besitzt.

14. Artikel nach Anspruch 8, wobei das polymere Material ein Elastizitätsmodul ("Young's Modulus") von mindestens etwa 100 MPa bis etwa 160 MPa und eine Bruchdehnung von etwa 170% bis etwa 300% beim Testen nach dem Standard ASTM D638 besitzt.

15. Artikel nach Anspruch 8, wobei das polymere Material eine Zugspannung bei Bruch von etwa 5 MPa bis etwa 15 MPa besitzt, gemessen nach ASTM D638.

## Revendications

1. Article comprenant :
une pluralité de couches comprenant un matériau polymère, le matériau polymère comprenant un copolyester éther ayant des unités d'un composant diacide et des unités d'un composant glycol,
dans lequel :
les unités du composant diacide sont dérivées d'au moins un acide dicarboxylique aliphatique comprenant l'acide 1,4-cyclohexanedicarboxylique ; et
les unités du composant glycol sont dérivées du 1,4-cyclohexanediméthanol et d'un polyalkylène éther glycol, dans lequel
l'article comprenant la pluralité de couches est obtenu par chauffage sélectif de parties d'un lit de poudre comprenant le matériau polymère, d'une manière couche par couche, selon une conception prédéterminée à l'aide d'une source d'énergie.

2. Article selon la revendication 1, dans lequel le matériau polymère comprend un élastomère thermoplastique et un composant résine.

3. Article selon l'une quelconque des revendications 1 à 2, dans lequel l'élastomère thermoplastique comprend un copolymère à blocs de styrène et le composant résine comprend une résine à base d'hydrocarbures.

4. Article selon l'une quelconque des revendications 1 à 2, dans lequel le copolyester éther représente entre environ 50 % en poids et environ 99 % en poids du matériau polymère, l'élastomère thermoplastique représente entre environ 1 % en poids et environ 50 % en poids du matériau polymère, et le composant résine représente entre 0 % en poids et environ 10 % en poids du matériau polymère.

5. Article selon la revendication 1, dans lequel la pluralité de couches sont agencées selon une conception prédéterminée.

6. Article selon l'une quelconque des revendications 1 à 2, dans lequel le polyalkylène éther glycol comprend du polytétraméthylène éther glycol.

7. Article selon la revendication 1, dans lequel la pluralité de couches peut comprendre un matériau contenant de la silice.

8. Article selon la revendication 1
dans lequel le matériau polymère qui comprend le copolyester éther et qui est exempt d'un élastomère thermoplastique et d'un composant résine a une viscosité inhérente d'environ 0,8 dUg à environ 1,5 dUg mesurée à 25 °C dans 100 ml d'une solution 60/40 de phénol/tétrachloréthane comprenant 0,5 g du matériau polymère.

9. Article selon la revendication 8, dans lequel le composant diacide comprend au moins environ 60 % en mole d'un isomère trans d'acide 1,4-cyclohexanedicarboxylique et/ou dans lequel le composant glycol comprend au moins environ 60 % en mole d'un isomère trans de 1,4-cyclohexanediméthanol.

10. Article selon la revendication 8, dans lequel d'environ 5 % en mole à environ 35 % en mole des unités du composant glycol sont dérivées de polytétraméthylène éther glycol et d'environ 65 % en mole à environ 95 % en mole des unités du composant glycol sont dérivées de 1,4-cyclohexanediméthanol.

11. Article selon la revendication 8, dans lequel :
le matériau polymère comprend un agent de ramification, l'agent de ramification comprenant un acide polyprotique ayant au moins trois groupes carboxyle et de 3 à 60 atomes de carbone; et le composant diacide comprend d'environ 0,1 % en mole à environ 1,5 % en mole de l'agent de ramification ou
dans lequel :
le matériau polymère comprend un agent de ramification, l'agent de ramification comprenant un polyol ayant au moins trois groupes hydroxyle et de 3 à 60 atomes de carbone ; et
le composant glycol comprend d'environ 0,1 % en mole à environ 1,5 % en mole de l'agent de ramification.

12. Article selon la revendication 8, dans lequel une couche de la pluralité de couches a une épaisseur d'environ 0,02 mm à environ 0,75 mm.

13. Article selon la revendication 8, dans lequel le matériau polymère a un module de Young d'au moins environ 125 MPa et le matériau polymère, lorsqu'il est testé selon la norme ASTM D638, a un allongement à la rupture d'environ 1 % à environ 45 %.

14. Article selon la revendication 8, dans lequel le matériau polymère a un module de Young d'environ 100 MPa à environ 160 MPa et un allongement à la rupture d'environ 170 % à environ 300 % lorsqu'il est testé selon la norme ASTM D638.

15. Article selon la revendication 8, dans lequel le matériau polymère a une résistance à la rupture d'environ 5 MPa à environ 15 MPa, mesurée selon la norme ASTM D638.
